(19) Europäisches Patentamt
European Patent Office
Office européen des brevets

(11) **EP 4 637 221 A1**

(12) **EUROPEAN PATENT APPLICATION**
published in accordance with Art. 153(4) EPC

(43) Date of publication:
**22.10.2025 Bulletin 2025/43**

(21) Application number: **23909318.0**

(22) Date of filing: **07.09.2023**

(51) International Patent Classification (IPC):
***H04W 52/02*** (2009.01)     ***H04W 52/14*** (2009.01)

(52) Cooperative Patent Classification (CPC):
**H04W 52/02; H04W 52/14; H04W 52/22;
H04W 52/36; H04W 88/06**

(86) International application number:
**PCT/CN2023/117367**

(87) International publication number:
**WO 2024/139380 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2022 CN 202211741318**

(71) Applicant: **Honor Device Co., Ltd.
Shenzhen, Guangdong 518040 (CN)**

(72) Inventor: **SUN, Xiaoyu
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **TRANSMISSION POWER DETERMINATION METHOD, CHIP, TERMINAL DEVICE, AND READABLE STORAGE MEDIUM**

(57) This application provides a transmission power determination method, a chip, a terminal device, and a readable storage medium. The method includes: after receiving uplink scheduling signaling sent by a base station to a first SIM card each time, first determining, by a terminal device adopting a radio frequency sharing mode, whether a transmission drop occurs on the first SIM card after the base station sends the uplink scheduling signaling to the first SIM card at a previous time; and in a case that the transmission drop occurs, dropping (or understood as ignoring or not considering), by the terminal device, a TPC instruction in the received uplink scheduling signaling. In this way, when calculating signal transmission power at a current time, the terminal device may not include a value of a power adjustment step size indicated by the TPC instruction into a calculation process, thus not adjusting up a signal transmission power value calculated by the terminal device. The problem of additional power consumption overhead of the terminal device that may affect the working performance of the terminal device and cause unexpectedly high receiving power of the base station is solved.

FIG. 3

# EP 4 637 221 A1

## Description

This application claims priority to Chinese Patent Application No. 202211741318.6, filed with China National Intellectual Property Administration on December 31, 2022 and entitled "TRANSMISSION POWER DETERMINATION METHOD, CHIP, TERMINAL DEVICE, AND READABLE STORAGE MEDIUM", which is incorporated herein by reference in its entirety.

## TECHNICAL FIELD

This application relates to the field of communication technology, and in particular, to a transmission power determination method, a chip, a terminal device, and a readable storage medium.

## BACKGROUND

When establishing a communication connection between a terminal device (user equipment, UE) and a base station, if the terminal device is close to the base station or there are fewer obstacles between the two, resulting in a smaller signal loss between the terminal device and the base station, the terminal device may adopt lower transmission power to communicate with the base station. If the terminal device is far away from the base station or there are many obstacles between the two, resulting in a greater signal loss between the terminal device and the base station, the terminal device needs to adopt higher transmission power to communicate with the base station. To compensate for a signal loss on different transmission paths and maintain stable receiving power at the base station, it is necessary to control the transmission power of the terminal device.

During the power control process, the base station issues a specific reference signal (Reference Signal, RS) to the UE at fixed transmission power, and the RS may experience attenuation during transmission. When the terminal device receives the RS, the signal strength may weaken. The terminal device may obtain the signal strength when receiving the RS (referred to as the receiving power of the RS), and then use a difference obtained by subtracting the receiving power of the RS from the transmission power of the RS when transmitted on the base station side as a path loss between the base station and the terminal device. Then, the terminal device determines the magnitude of the transmission power of the terminal device based on the path loss between the base station and the terminal device.

## SUMMARY

Embodiments of this application provide an optimized transmission power determination method, a chip, a terminal device, and a readable storage medium.

According to a first aspect, an embodiment of this application provides a transmission power determination method applied to a terminal device, and in a case that the terminal device is configured with a first SIM card and a second SIM card, the method includes: receiving, by the terminal device, first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing the terminal device to determine target transmission power based on the power control instruction, and the target transmission power is transmission power at which the first SIM card sends the first-type uplink signal through the terminal device; in a case that the first SIM card and the second SIM card share the same radio frequency transmission path, if a transmission drop of the first-type uplink signal occurs on the first SIM card after the first SIM card receives the first uplink scheduling signaling at a previous time, adjusting, by the terminal device, a value of a power adjustment step size indicated by the power control instruction in the first uplink scheduling signaling received at a current time to zero; and determining, by the terminal device, the target transmission power based on an adjusted value of the power adjustment step size corresponding to the power control instruction in the first uplink scheduling signaling received at the current time.

In the above embodiment, for the terminal device adopting a radio frequency sharing mode, after receiving uplink scheduling signaling sent by the base station to the first SIM card at each time (assuming that the uplink scheduling signaling requires the terminal device to use a first channel to send an uplink signal), the terminal device first determines whether the transmission drop occurs on the first SIM card after the base station sends the uplink scheduling signaling to the first SIM card at the previous time (the uplink scheduling signaling requires the terminal device to use the first channel to send the uplink signal). In a case that the transmission drop occurs, the terminal device may drop (or understood as ignore or not consider) a TPC instruction in the received uplink scheduling signaling. In this way, when the terminal device calculates the signal transmission power at the current time, the terminal may not include a value of the power adjustment step size indicated by the TPC instruction in the calculation process (it may also be understood as that the terminal adjusts the value of the power adjustment step size indicated by the received power control instruction to zero and includes the adjusted value zero of the power adjustment step size in the calculation process), thus not adjusting up the signal

2

transmission power value calculated by the terminal device. The problem of additional power consumption overhead of the terminal device that may affect the working performance of the terminal device and cause unexpectedly high receiving power of the base station is solved.

With reference to the first aspect, in a possible implementation, the determining, by the terminal device, the target transmission power based on an adjusted value of the power adjustment step size corresponding to the power control instruction in the first uplink scheduling signaling received at the current time specifically includes: acquiring, by the terminal device, a power adjustment value calculated after receiving the first uplink scheduling signaling at the previous time; calculating a first power adjustment value corresponding to the first uplink scheduling signaling received at the current time based on the power adjustment value calculated after receiving the first uplink scheduling signaling at the previous time and the adjusted value of the power adjustment step size corresponding to the power control instruction in the first uplink scheduling signaling received at the current time, where the first power adjustment value corresponds to a scenario that the power adjustment value is determined by means of accumulation; and calculating the target transmission power based on the first power adjustment value. In this way, the power adjustment step size corresponding to the TPC instruction may be prevented from being included in the calculation process of the transmission power, thus avoiding the situations of adjusting up the signal transmission power of the terminal device, increasing the additional power consumption of the terminal device, and affecting the performance of the terminal device.

With reference to the first aspect, in a possible implementation, the determining, by the terminal device, the target transmission power based on an adjusted value of the power adjustment step size corresponding to the power control instruction in the first uplink scheduling signaling received at the current time specifically includes: setting, by the terminal device, a second power adjustment value corresponding to the first uplink scheduling signaling received at the current time to be equal to zero, where the second power adjustment value corresponds to a scenario that the power adjustment value is determined by means of absolute value; and calculating the target transmission power based on the second power adjustment value. In this way, the power adjustment step size corresponding to the TPC instruction may be prevented from being included in the calculation process of the transmission power, thus avoiding the situations of adjusting up the signal transmission power of the terminal device, increasing the additional power consumption of the terminal device, and affecting the performance of the terminal device.

With reference to the first aspect, in a possible implementation, in a case that the first SIM card and the second SIM card share the same radio frequency transmission path, if the transmission drop of the first-type uplink signal does not occur on the first SIM card after the first SIM card receives the first uplink scheduling signaling at the previous time, the terminal device determines a first power adjustment step size corresponding to the scenario that the power adjustment value is determined by means of accumulation based on a TPC command field in the power control instruction in the first uplink scheduling signaling received at the current time; the terminal device acquires a power adjustment value calculated after receiving the first uplink scheduling signaling at the previous time; a third power adjustment value corresponding to the first uplink scheduling signaling received at the current time is calculated based on the power adjustment value calculated after receiving the first uplink scheduling signaling at the previous time and the first power adjustment step size, where the third power adjustment value corresponds to the scenario that the power adjustment value is determined by means of accumulation; and the target transmission power is calculated based on the third power adjustment value. In this way, the power adjustment step size corresponding to the TPC instruction may be prevented from being included in the calculation process of the transmission power, thus avoiding the situations of adjusting up the signal transmission power of the terminal device, increasing the additional power consumption of the terminal device, and affecting the performance of the terminal device.

With reference to the first aspect, in a possible implementation, after the terminal device determines the target transmission power based on the adjusted value of the power adjustment step size corresponding to the power control instruction in the first uplink scheduling signaling received at the current time, the method further includes: determining whether the radio frequency transmission path is occupied; if no, sending the first-type uplink signal according to the target transmission power; and if yes, not sending the first-type uplink signal, where the first-type uplink signal is a signal to be sent by the terminal device instructed by the first uplink scheduling signaling received at the current time.

With reference to the first aspect, in a possible implementation, the transmission drop of the first-type uplink signal includes: the first SIM card does not send a signal to be sent by the terminal device instructed by the first uplink scheduling signaling received at the previous time after receiving the first uplink scheduling signaling for scheduling the first-type uplink signal at the previous time.

With reference to the first aspect, in a possible implementation, in a case that the first SIM card and the second SIM card share the same radio frequency transmission path, if the transmission drop of the first-type uplink signal does not occur on the first SIM card after the first SIM card receives the first uplink scheduling signaling at the previous time, the terminal device determines a second power adjustment step size corresponding to the scenario that the power adjustment value is determined by means of absolute value based on a TPC command field in the power control instruction in the first uplink scheduling signaling received at the current time; the terminal device sets a fourth power adjustment value corresponding to the first uplink scheduling signaling received at the current time to be equal to the second power adjustment step size, where the fourth power adjustment value corresponds to the scenario that the power adjustment value is determined by means of absolute value; and the target transmission power is calculated based on the fourth power adjustment value. In this way, the power adjustment step size corresponding to the TPC instruction may be prevented from being included in the calculation process of the transmission power, thus avoiding the situations of adjusting up the signal transmission power of the terminal device, increasing the additional power consumption of the terminal device, and affecting the performance of the terminal device.

According to a second aspect, an embodiment of this application provides a transmission power determination method applied to a terminal device, and in a case that the terminal device is configured with a first SIM card and a second SIM card, the method includes: receiving, by the terminal device, first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing the terminal device to determine target transmission power based on the power control instruction, and the target transmission power is transmission power at which the first SIM card sends the first-type uplink signal through the terminal device; and in a case that the first SIM card and the second SIM card share the same radio frequency transmission path, if a transmission drop of the first-type uplink signal occurs on the first SIM card after the first SIM card receives the first uplink scheduling signaling at a previous time, not considering, by the terminal device, a value of a power adjustment step size indicated by the power control instruction in the first uplink scheduling signaling received at a current time when determining the target transmission power.

In the above embodiment, for the terminal device adopting a radio frequency sharing mode, after receiving uplink scheduling signaling sent by the base station to the first SIM card at each time (assuming that the uplink scheduling signaling requires the terminal device to use a first channel to send an uplink signal), the terminal device first determines whether the transmission drop occurs on the first SIM card after the base station sends the uplink scheduling signaling to the first SIM card at the previous time (the uplink scheduling signaling requires the terminal device to use the first channel to send the uplink signal). In a case that the transmission drop occurs, the terminal device may drop (or understood as ignore or not consider) a TPC instruction in the received uplink scheduling signaling. In this way, when the terminal device calculates the signal transmission power at the current time, the terminal may not include a value of the power adjustment step size indicated by the TPC instruction in the calculation process (it may also be understood as that the terminal adjusts the value of the power adjustment step size indicated by the received power control instruction to zero and includes the adjusted value zero of the power adjustment step size in the calculation process), thus not adjusting up the signal transmission power value calculated by the terminal device. The problem of additional power consumption overhead of the terminal device that may affect the working performance of the terminal device and cause unexpectedly high receiving power of the base station is solved.

According to a third aspect, an embodiment of this application provides a transmission power determination method applied to a terminal device, and in a case that the terminal device is configured with a first SIM card and a second SIM card, the method includes: receiving, by the terminal device, first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing the terminal device to determine target transmission power based on the power control instruction, and the target transmission power is transmission power at which the first SIM card sends the first-type uplink signal through the terminal device; and in a case that the first SIM card and the second SIM card share the same radio frequency transmission path, if a transmission drop of the first-type uplink signal occurs on the first SIM card after the first SIM card receives the first uplink scheduling signaling at a previous time, using, by the terminal device, target transmission power determined after receiving the first uplink scheduling signaling at the previous time or target transmission power used for successfully transmitting the first-type uplink signal at the previous time as the target transmission power determined after receiving the first uplink scheduling signaling at a current time. In this way, computing resources of the terminal device may be saved and the working performance of the terminal device may be improved.

According to a fourth aspect, an embodiment of this application provides a terminal device. The terminal device includes: one or more processors, a display screen, a radio frequency communication module, and a memory. The memory is coupled to the one or more processors, the memory is configured to store a computer program code, the computer program code includes computer instructions, and the one or more processors invoke the computer instructions to cause the terminal device to perform the following steps: receiving, through the radio frequency communication module, first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing the terminal device to determine target transmission power based on the power control instruction, and the target transmission power is transmission power at which the first SIM card sends the first-type uplink signal through the terminal device; in a case that the first SIM card and the second SIM card share the same radio frequency transmission path, if a transmission drop of the first-type uplink signal occurs on the first SIM card after the first SIM card receives the first uplink scheduling signaling at a previous time, adjusting a value of a power adjustment step size indicated by the power control instruction in the first uplink scheduling signaling received at a current time to zero; and determining the target transmission power based on an adjusted value of the power adjustment step size corresponding to the power control instruction in the first uplink scheduling signaling received at the current time.

With reference to the fourth aspect, in a possible implementation, the one or more processors invoke the computer instructions to cause the terminal device to perform the following steps: acquiring a power adjustment value calculated after receiving the first uplink scheduling signaling at the previous time; calculating a first power adjustment value corresponding to the first uplink scheduling signaling received at the current time based on the power adjustment value calculated after receiving the first uplink scheduling signaling at the previous time and the adjusted value of the power adjustment step size corresponding to the power control instruction in the first uplink scheduling signaling received at the current time, where the first power adjustment value corresponds to a scenario that the power adjustment value is determined by means of accumulation; and calculating the target transmission power based on the first power adjustment value.

With reference to the fourth aspect, in a possible implementation, the one or more processors invoke the computer instructions to cause the terminal device to perform the following steps: setting a second power adjustment value corresponding to the first uplink scheduling signaling received at the current time to be equal to zero, where the second power adjustment value corresponds to a scenario that the power adjustment value is determined by means of absolute value; and calculating the target transmission power based on the second power adjustment value.

With reference to the fourth aspect, in a possible implementation, the one or more processors invoke the computer instructions to cause the terminal device to perform the following steps: in a case that the first SIM card and the second SIM card share the same radio frequency transmission path, if the transmission drop of the first-type uplink signal does not occur on the first SIM card after the first SIM card receives the first uplink scheduling signaling at the previous time, determining a first power adjustment step size corresponding to the scenario that the power adjustment value is determined by means of accumulation based on a TPC command field in the power control instruction in the first uplink scheduling signaling received at the current time; acquiring a power adjustment value calculated after receiving the first uplink scheduling signaling at the previous time; calculating a third power adjustment value corresponding to the first uplink scheduling signaling received at the current time based on the power adjustment value calculated after receiving the first uplink scheduling signaling at the previous time and the first power adjustment step size, where the third power adjustment value corresponds to the scenario that the power adjustment value is determined by means of accumulation; and calculating the target transmission power based on the third power adjustment value.

With reference to the fourth aspect, in a possible implementation, the one or more processors invoke the computer instructions to cause the terminal device to perform the following steps: determining whether the radio frequency transmission path is occupied; if no, sending the first-type uplink signal according to the target transmission power; and if yes, not sending the first-type uplink signal, where the first-type uplink signal is a signal to be sent by the terminal device instructed by the first uplink scheduling signaling received at the current time.

With reference to the fourth aspect, in a possible implementation, the one or more processors invoke the computer instructions to cause the terminal device to perform the following steps: in a case that the first SIM card and the second SIM card share the same radio frequency transmission path, if the transmission drop of the first-type uplink signal does not occur on the first SIM card after the first SIM card receives the first uplink scheduling signaling at the previous time, determining a second power adjustment step size corresponding to the scenario that the power adjustment value is determined by means of absolute value based on a TPC command field in the power control instruction in the first uplink scheduling signaling received at the current time; setting a fourth power adjustment value corresponding to the first uplink scheduling signaling received at the current time to be equal to the second power adjustment step size, where the fourth power adjustment value corresponds to the scenario that the power adjustment value is determined by means of absolute value; and calculating the target transmission power based on the fourth power adjustment value.

According to a fifth aspect, an embodiment of this application provides a terminal device. The terminal device includes: one or more processors, a display screen, a radio frequency communication module, and a memory. The memory is coupled to the one or more processors, the memory is configured to store a computer program code, the computer program code includes computer instructions, and the one or more processors invoke the computer instructions to cause the terminal device to perform the following steps: receiving first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing the terminal device to determine target transmission power based on the power control instruction, and the target transmission power is transmission power at which the first SIM card sends the first-type uplink signal through the terminal device; and in a case that the first SIM card and the second SIM card share the same radio frequency transmission path, if a transmission drop of the first-type uplink signal occurs on the first SIM card after the first SIM card receives the first uplink scheduling signaling at a previous time, not considering a value of a power adjustment step size indicated by the power control instruction in the first uplink scheduling signaling received at a current time when determining the target transmission power.

According to a sixth aspect, an embodiment of this application provides a terminal device. The terminal device includes: one or more processors, a display screen, a radio frequency communication module, and a memory. The memory is coupled to the one or more processors, the memory is configured to store a computer program code, the computer program code includes computer instructions, and the one or more processors invoke the computer instructions to cause the terminal device to perform the following steps: receiving first uplink scheduling signaling for scheduling a first-type uplink signal, where the first uplink scheduling signaling is uplink scheduling signaling sent to the first SIM card, the first uplink scheduling signaling includes a power control instruction, the power control instruction is configured for instructing to determine target transmission power based on the power control instruction, and the target transmission power is transmission power at which the first SIM card sends the first-type uplink signal; and in a case that the first SIM card and the second SIM card share the same radio frequency transmission path, if a transmission drop of the first-type uplink signal occurs on the first SIM card after the first SIM card receives the first uplink scheduling signaling at a previous time, using target transmission power determined after receiving the first uplink scheduling signaling at the previous time or target transmission power used for successfully transmitting the first-type uplink signal at the previous time as the target transmission power determined after receiving the first uplink scheduling signaling at a current time.

According to a seventh aspect, an embodiment of this application provides a terminal device. The terminal device includes: a touch screen, a camera, one or more processors, and one or more memories. The one or more processors are coupled to the touch screen, the camera, and the one or more memories, the one or more memories are configured to store a computer program code, the computer program code includes computer instructions, and when the one or more processors execute the computer instructions, the terminal device is caused to perform the method according to the first aspect or any one of the possible implementations of the first aspect, the method according to the second aspect or any one of the possible implementations of the second aspect, or the method according to the third aspect or any one of the possible implementations of the third aspect.

According to an eighth aspect, an embodiment of this application provides a chip system. The chip system is applied to a terminal device. The chip system includes one or more processors. The processor is configured to invoke computer instructions to cause the terminal device to perform the method according to the first aspect or any one of the possible implementations of the first aspect, the method according to the second aspect or any one of the possible implementations of the second aspect, or the method according to the third aspect or any one of the possible implementations of the third aspect.

According to a ninth aspect, an embodiment of this application provides a computer program product including instructions. When the computer program product is run on a terminal device, the terminal device is caused to perform the method according to the first aspect or any one of the possible implementations of the first aspect, the method according to the second aspect or any one of the possible implementations of the second aspect, or the method according to the third aspect or any one of the possible implementations of the third aspect.

According to a tenth aspect, an embodiment of this application provides a computer-readable storage medium including instructions. When the computer instructions are run on a terminal device, the terminal device is caused to perform the method according to the first aspect or any one of the possible implementations of the first aspect.

## BRIEF DESCRIPTION OF DRAWINGS

FIG. 1 is an exemplary diagram of communication between a base station and a terminal device according to an embodiment of this application;
FIG. 2 is an exemplary diagram of communication between a dual SIM dual standby terminal device and a base station according to an embodiment of this application;
FIG. 3 is a flowchart of a transmission power determination method according to an embodiment of this application;
FIG. 4 is a flowchart of another transmission power determination method according to an embodiment of this application;
FIG. 5 is a flowchart of another transmission power determination method according to an embodiment of this application;
FIG. 6 is a schematic structural diagram of an exemplary terminal device 100 according to an embodiment of this application; and
FIG. 7 is a schematic diagram of software architecture of an exemplary terminal device 100 according to an embodiment of this application.

## DESCRIPTION OF EMBODIMENTS

The following clearly and completely describes technical solutions in embodiments of this application with reference to the accompanying drawings in the embodiments of this application. Apparently, the described embodiments are only some embodiments rather than all the embodiments of this application. Embodiment mentioned in the specification means that particular features, structures, or characteristics described with reference to the embodiment may be included in at least one embodiment of embodiments of this application. Appearances of phrases in various places in the specification do not all indicate the same embodiment, nor are separate or alternative embodiments mutually exclusive of other embodiments. Those skilled in the art may explicitly or implicitly understand that the embodiments described herein may be combined with other embodiments. All other embodiments obtained by a person of ordinary skill in the art based on the embodiments of this application without creative efforts shall fall within the protection scope of this application.

In the specification, claims, and accompanying drawings of this application, the terms "first", "second", "third", and the like are intended to distinguish between different objects but do not indicate a particular order. In addition, the terms "include", "have", and any variant thereof are intended to cover a non-exclusive inclusion. For example, a series of steps or units are included, or optionally, steps or units that are not listed are included, or optionally, other steps or units that are intrinsic to these processes, methods, products, or devices are included.

Only parts related to this application are shown in the accompanying drawings, rather than all content. Before discussing the example embodiments in more detail, it should be noted that some of the example embodiments are described as processes or methods depicted as flowcharts. Although the flowchart describes operations (or steps) as a sequential process, multiple operations may be performed in parallel, concurrently, or simultaneously. In addition, an order of the operations may be rearranged. The process may be ended when operations of the process are completed, but may also have additional steps not included in the figure. The process may correspond to a method, a function, a procedure, a subroutine, a subprogram, and the like.

Terms such as "component", "module", "system", and "unit" used in this specification are generally intended to refer to a computer-related entity, hardware, firmware, a combination of hardware and software, software, or software in execution. For example, a unit may be, but is not limited to, a process running on a processor, a processor, an object, an executable file, an executable thread, a program, and/or the unit is distributed between two or more computers. In addition, these units may be executed by various computer-readable media storing various data structures. For example, a unit may communicate through local and/or remote processes based on a signal with one or more data packets (for example, second unit data exchanged by another unit from a local system, a distributed system and/or a network, for example, an Internet that interacts with another system by using a signal).

A signal transmission power determination method provided in embodiments of this application may be applied to a terminal device, such as a mobile phone, a tablet computer, a wearable device, a vehicle-mounted device, an augmented reality (Augmented Reality, AR)/virtual reality (Virtual Reality, VR) device, a notebook computer, an ultra-mobile personal computer (ultra-mobile personal computer, UMPC), a netbook, and a personal digital assistant (personal digital assistant, PDA). The specific type of the terminal device is not limited in the embodiments of this application.

When establishing a communication connection between a terminal device and a base station, if the terminal device is close to the base station or there are fewer obstacles between the two, resulting in a smaller signal loss between the terminal device and the base station, the terminal device may adopt lower transmission power to communicate with the base station. If the terminal device is far away from the base station or there are many obstacles between the two, resulting in a greater signal loss between the terminal device and the base station, the terminal device needs to adopt higher transmission power to communicate with the base station. To compensate for a signal loss on different transmission paths and maintain stable receiving power at the base station, it is necessary to control the transmission power of the terminal device.

The power control of the terminal device mainly includes two manners: open-loop power control and closed-loop power control (also known as inner-loop power control).

Open-loop power control refers to open adjustment of the transmission power of the terminal device, in which the terminal device may adjust its own transmission power based on the strength of the signal coverage of the base station measured by itself. It is usually used when the terminal device registers with the network, by sending a registration signal to the base station through a physical random access channel (Physical Random Access Channel, PRACH). After the terminal device registers with the network, closed-loop power control may be adopted to adjust the transmission power.

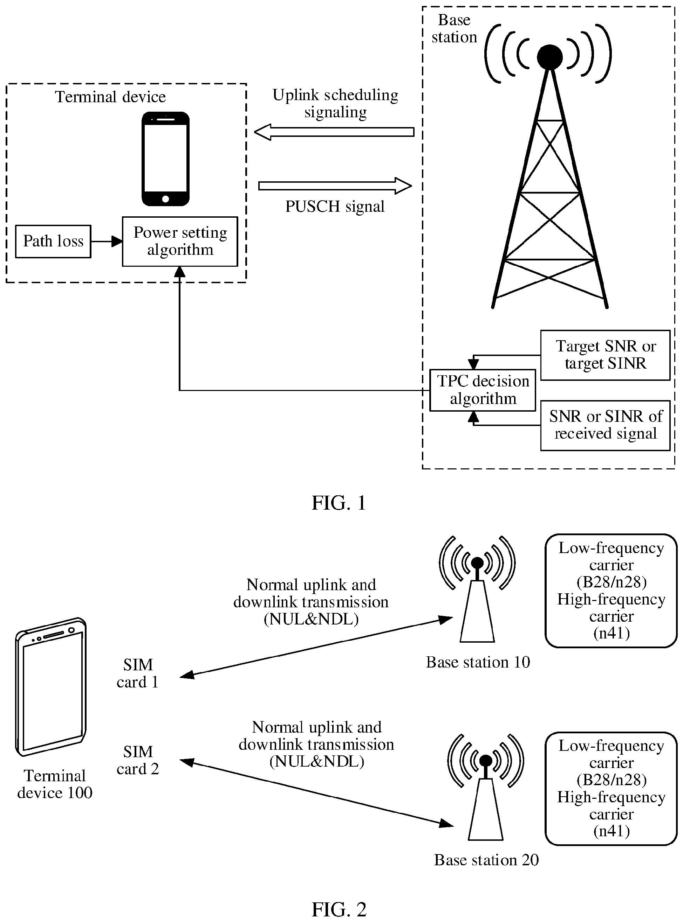

In the scenario of closed-loop power control, the magnitude of the transmission power of the terminal device is not only related to the strength of the signal coverage of the base station measured by itself, but also to a transmission power control (Transmit Power Control, TPC) instruction sent by the base station. As shown in FIG. 1, the base station may use a physical downlink control channel (Physical Downlink Control Channel, PDCCH) to send uplink scheduling signaling to the terminal device, and the uplink scheduling signaling may be configured for instructing the terminal device to send a specific uplink signal. For ease of description, in the embodiments of this application, a signal transmitted by the terminal device through a physical uplink shared channel (Physical Uplink Shared Channel, PUSCH) is referred to as a PUSCH signal; and a signal transmitted by the terminal device through a physical uplink control channel (Physical Uplink Control Channel, PUCCH) is referred to as a PUCCH signal. The specific uplink signal may be a PUSCH signal, a PUCCH signal, or an SRS (Sounding Reference Signal). In the embodiments of this application, description is made by taking the uplink scheduling signaling sent by the base station being configured for instructing the terminal device to send a PUSCH signal as an example.

The base station may send a downlink reference signal to the terminal device (for example, in 4G, the downlink reference signal may be a CRS (Cell Reference Signal), and in 5G, the downlink reference signal may be an SSB (Synchronization Signaling Block)), and the signal carries the transmission power $P_{t,crs}$ of the signal. After receiving the downlink reference signal sent by the base station, the terminal device may acquire the receiving power $P_{r,crs}$ of the received downlink reference signal, and $P_{r,crs}$ is the downlink reference signal receiving power (Reference Signal Receiving Power, RSRP) of the downlink reference signal received by the terminal device. The terminal device may calculate the path loss (Path Loss, PL) of the downlink reference signal sent by the base station to the terminal device according to $P_{r,crs}$ and $P_{t,crs}$, that is, PL=$P_{t,crs}$ - $P_{r,crs}$. Then, the terminal device may calculate a transmission power value of the uplink signal to be transmitted at a current time according to PL. Finally, the terminal device may use a radio channel to send the uplink signal to the base station according to the calculated transmission power value.

The base station may adjust the uplink transmission power of the terminal device according to the signal-to-noise ratio (Signal-Noise Ratio, SNR) or signal to interference plus noise ratio (Signal to Interference plus Noise Ratio, SINR) of the uplink signal sent by the terminal device to the base station through the radio channel. Specifically, the base station may preset a target SNR, and the target SNR is configured for measuring whether the received signal may be accurately demodulated. The base station may adopt a TPC decision algorithm (TPC Decision Algorithm) to determine whether to adjust up or down the transmission power of the terminal device. In the embodiments of this application, description is made by taking the uplink signal received by the base station being a PUSCH signal as an example. When the SNR of the PUSCH signal received by the base station is less than a target SNR, the base station may consider that the power of the signal transmitted by the terminal device is too low, thus affecting the demodulation effect of the signal. Therefore, a TPC instruction is sent to the terminal device to control the terminal device to adjust up the transmission power. When the SNR of the PUSCH signal received by the base station is greater than the target SNR, the base station may consider that the power of the signal transmitted by the terminal device at this time is sufficient for demodulation. To reduce the consumption of resources such as power by the terminal device, a TPC instruction is sent to the terminal device to control the terminal device to adjust down the transmission power. The TCP instruction sent by the base station may be included in the uplink scheduling signaling sent by the base station to the terminal device.

Then, the terminal device adopts a power setting algorithm to determine the transmission power of the terminal device according to the TPC instruction sent by the base station. This process is referred to as closed-loop power control.

The process that the terminal device determines the signal transmission power $P_{push}^{(i)}$ based on the path loss may be obtained through formula (1). The terminal device may input the path loss into formula (2) to obtain the calculated transmission power (a calculated value of the transmission power $P_{\text{calculated value}}$). If the signal transmission power $P_{\text{calculated value}}$ calculated by the terminal device is greater than the maximum transmission power $P_{CMAX}$ corresponding to a default power level of the current working bandwidth of the terminal device, the terminal device may transmit according to $P_{CMAX}$; and if it is smaller than $P_{CMAX}$, the terminal device may transmit according to the calculated value of the transmission power.

Specifically,

$$P_{push}^{(i)}=\min\left\{\begin{matrix}P_{CMAX}\\P_o(j) + \alpha(j)PL(q) + 10\log_{10}(2^{\mu} \cdot M_{RB}) + \Delta_{TF} + f(i)\end{matrix}\right\} \quad (1)$$

$$P_{\text{calculated value}}=P_o(j) + \alpha(j)PL(q) + 10\log_{10}(2^{\mu} \cdot M_{RB}) + \Delta_{TF} + f(i) \quad (2)$$

In formula (1), $P_{CMAX}$ represents the maximum transmission power corresponding to the default power level of the current working bandwidth of the terminal device; $j$ represents the index of a configuration set; $P_o(j)$ is a network configurable parameter that can represent the target receiving power, that is, the power of a signal that the base station wants to receive; $\alpha(j)$ is the interference compensation factor that is configurable for the network; $PL(q)$ represents the path loss of a reference signal q during uplink communication, i.e., the target path loss in the embodiments of this application; $\mu$ corresponds to the subcarrier spacing (SCS), $2^{\mu}$ *15 KHz represents the subcarrier spacing, and for example, when $\mu$=0, the subcarrier spacing is 15 KHz, and when $\mu$=1, the subcarrier spacing is 30 KHz; $M_{RB}$ represents the number of resource blocks allocated for transmission through the PUSCH channel; $\Delta_{TF}$ represents the accumulated value of power adjustment of the modulation and coding scheme (modulation and coding scheme, MCS); $f(i)$ represents the power adjustment value of closed-loop power control, and $f(i)$ is obtained based on the power adjustment step size indicated by the TPC instruction; and i represents the i-th slot (that is, the PUSCH corresponding to the TPC instruction received at a current time needs to be sent in the *i*-th slot).

For example, when *j*=2, according to the upper layer message configuration, it can be known that:$P_o$(*j*) =-76 dB, $\alpha$ (*j*)=0.8, $M_{RB}$=4, $\mu$=0, $\Delta_{TF}$=0 dB, $PL$(*q*)=115 dB. According to the log (log) message of the terminal device, if *f(i)* is 3 dB, the transmission power $P_{push}^{(i)}$ configured by the UE for the PUSCH (i.e., the PUSCH signal scheduled by the first uplink scheduling signaling received at a current time) in the *i*-th slot (Slot) may be calculated according to the following formula:

$$P_{push}^{(i)}=P_o(j) + \alpha(j)PL(q) + 10\log_{10}(2^{\mu} \cdot M_{RB}) + \Delta_{TF} + f(i)$$

$$=\text{-76+0.8}\times\text{115+10log}(1 \times 0.4)\text{+0+3}$$

$$=25 \text{ dBm}$$

In formula (1), *f(i)* is determined by the parameter tpc-Accumulation, and *f(i)* may be determined by means of accumulation and by means of absolute value. When the parameter tpc-Accumulation is configured as enabled (enabled) or is not configured, *f(i)* is determined by means of accumulation, that is, *f(i)* is obtained by accumulating the power adjustment step sizes indicated by multiple TPC instructions. Specifically, *f(i)*= *f(i* - 1)+$\delta_{PUSCH}$(*i*-$K_{PUSCH}$), where $\delta_{PUSCH}$(*i*-$K_{PUSCH}$) represents the power adjustment step size (by means of accumulation) of the PUSCH signal corresponding to the TPC instruction received at a current time (the specific slot corresponding to the current time is *i*-$K_{PUSCH}$), and *f(i* - 1) is the power adjustment value of the PUSCH signal calculated after receiving the TPC instruction at a previous time. Exemplarily, assuming that the power adjustment step size acquired from the uplink scheduling signaling for the PUSCH signal received at a current time is 1 dB, and the power adjustment value *f(i* - 1) calculated after receiving the uplink scheduling signaling for the PUSCH signal at a previous time is 2 dB, then the power adjustment value *f(i)* calculated after receiving the uplink scheduling signaling for the PUSCH signal at the current time is to be 2+1=3 dB. The power adjustment value *f(i* - 1) calculated after receiving the uplink scheduling signaling for the PUSCH signal at the previous time is obtained by adding a power adjustment step size (assumed to be -1 dB) acquired from the uplink scheduling signaling for the PUSCH signal received at the previous time and a power adjustment value *f(i* - 2) (assumed to be 3 dB) calculated after receiving the uplink scheduling signaling for the PUSCH signal at a time before the previous time... and so on. It can be known that: the power adjustment value calculated after the terminal device receives the uplink scheduling signaling at each time is obtained by summing the power adjustment value calculated according to the uplink scheduling signaling received at the previous time (signals required to be sent by the uplink scheduling signaling received at the previous time and the uplink scheduling signaling received at the current time are of the same type, and both are PUSCH signals) and the power adjustment step size acquired from the uplink scheduling signaling received at the current time.

When the parameter tpc-Accumulatio is configured as disabled (disabled), *f(i)* is determined by means of absolute value, that is, *f(i)* = $\delta_{PUSCH}$(*i* - $K_{PUSCH}$), *that is, the value of f(i) is equal to* the power adjustment step size (by means of absolute value) indicated by the TPC instruction in the uplink scheduling signaling received at the current time. The uplink scheduling instruction sent by the base station includes a TPC instruction, and the TCP instruction may include a TPC command field. After parsing the command field in the TPC instruction, the terminal device may query a corresponding TPC command field-power adjustment step size mapping table to acquire the closed-loop power adjustment step size. Exemplarily, the TPC command field-power adjustment step size mapping table may be as shown in the following Table 1:

**Table 1**

| TPC command field | Power adjustment step size $\delta_{PUSCH}$(*i* - $K_{PUSCH}$) (by means of accumulation) [dB] | Power adjustment step size $\delta_{PUSCH}$(*i* - $K_{PUSCH}$) (by means of absolute value) [dB] |
|---|---|---|
| 0 | -1 | -4 |
| 1 | 0 | -1 |
| 2 | 1 | 1 |
| 3 | 3 | 4 |
| ... | ... | ... |

When tpc-Accumulation is configured as enabled (enabled) or is not configured, power adjustment is performed by means of accumulation. For example, if the uplink scheduling signaling received at the current time requires the terminal device to send a PUSCH signal, and the TPC command field value in the TPC instruction of the uplink scheduling signaling is 1, the terminal device may determine that the power adjustment step size is 0 dB by querying Table 1 above. In addition, the terminal device may also query the uplink scheduling signaling corresponding to the PUSCH signal received at the previous time through the log (log) (the uplink scheduling signaling corresponding to the PUSCH signal, that is, the terminal device is required to send the uplink signal through a PUSCH), and then calculate the power adjustment value $f(i-1)$. Then, $f(i-1)$ is accumulated with the power adjustment step size queried at the current time to obtain an accumulated value, and the accumulated value is the power adjustment value $f(i)$ of the terminal device after receiving the uplink scheduling signaling at the current time.

In some embodiments, when the parameter tpc-Accumulatio is configured as disabled (disabled), power adjustment is performed by means of absolute value. For example, if the uplink scheduling signaling received at the current time requires the terminal device to send a PUSCH signal, and the TPC command field value in the TPC instruction of the uplink scheduling signaling is 1, the terminal device may determine that the power adjustment size is -1 dB by querying Table 1 above. Therefore, in the transmission power $P_{calculated}$ value calculated by the terminal device, the value of $f(i)$ is equal to -1 dB.

The base station dynamically adjusts the transmission power of the terminal device through closed-loop power control, thereby being beneficial for the terminal device to use the most suitable transmission power to send the signal, thus ensuring good signal quality of the uplink signal sent to the base station.

However, for the terminal device, two subscriber identity module (Subscriber Identity Module, SIM) cards, namely an SIM card 1 and an SIM card 2, are generally provided. The SIM card 1 may run a high-priority service (for example, call service) with a high real-time requirement, and the SIM card 2 may run a low-priority service (for example, web page browsing) with a low real-time requirement. As shown in FIG. 2, the SIM card 1 may communicate with a base station 10 through a terminal device 100, and the SIM card 2 may communicate with a base station 20 through the terminal device 100. For the terminal device 100 using the SIM card 1 and the SIM card 2, communication may be achieved by means of dual SIM and dual active (Dual SIM And Dual Active, DSDA).

For DSDA, there are two working modes, that is, a full concurrent dual SIM dual active mode and a radio frequency sharing mode. For the terminal device adopting the full concurrent dual SIM dual active mode, each SIM card has its own independent radio frequency transmission path, and includes a front-end path, an antenna, a power supply, and the like. In this working mode, two SIM cards may perform communication services simultaneously, and the communication service of one SIM card may not affect the communication service of the other SIM card.

For the terminal device adopting the radio frequency sharing mode, two SIM cards are only configured with one radio frequency transmission path (also known as uplink path). Therefore, the two SIM cards may adopt time-division multiplexing to transmit signals to the base station by using the same radio frequency transmission path at different time periods. In this case, the mode in which the two SIM cards are in may be referred to as time division duplexing (Time Division Duplexing, TDD) mode. The two SIM cards on the terminal device 100 contend for and share the radio frequency transmission path through a time division multiplexing technology.

In the radio frequency sharing mode, if the SIM card 1 running a high-priority service occupies the radio frequency transmission path at certain time, then within a specified time period (e.g., 10 ms), regardless of whether the SIM card 1 uses the radio frequency transmission path to transmit the signal to the base station 10, the SIM card 2 running a low-priority service may not be able to use the radio frequency transmission path. This means that if the SIM card 2 receives an uplink scheduling instruction sent by the base station 20 in the process that the SIM card 1 occupies the radio frequency transmission path, the SIM card 2 cannot send a PUSCH signal according to the uplink scheduling signaling sent by the base station 20 at the current time, that is, transmission drop (Tx Drop) occurs on the SIM card 2. The base station also cannot receive the PUSCH signal corresponding to the uplink scheduling signaling.

In this case, the base station may consider that the terminal device fails to transmit the PUSCH signal of the SIM card 2 due to insufficient transmission power. Therefore, when the uplink scheduling signaling that requires the terminal device to use the same type of channel to send the uplink signal is sent to the SIM card 2 at a next time, the base station may send a TPC instruction to the SIM card 2 to adjust up the transmission power of the PUSCH signal sent by the SIM card 2 through the terminal device.

However, the terminal device does not send the PUSCH signal to the base station since the transmission drop occurs on the SIM card 2, rather than that signal transmission fails since the signal transmission power is low. Therefore, it is not necessary for the terminal device to adjust up the transmission power of the signal according to the power adjustment value indicated by the TPC instruction in the uplink scheduling signaling received at the current time. If the terminal device adjusts up the signal transmission power at the current time according to the power adjustment value, additional power consumption overhead of the terminal device may be caused, thus affecting the working performance of the terminal device, and further causing the problem of unexpectedly high receiving power of the base station.

Therefore, to solve the problem, some embodiments of this application provide a transmission power determination method. The method includes: for the terminal device adopting a radio frequency sharing mode, after receiving uplink scheduling signaling sent by the base station to the first SIM card at each time (assuming that the uplink scheduling signaling requires the terminal device to use a first channel to send an uplink signal), the terminal device first determines whether a transmission drop occurs on the first SIM card after the base station sends the uplink scheduling signaling to the first SIM card at the previous time (the uplink scheduling signaling requires the terminal device to use the first channel to send the uplink signal). In a case that the transmission drop occurs, the terminal device may drop (or understood as ignore or not consider) a TPC instruction in the received uplink scheduling signaling. In this way, when the terminal device calculates the signal transmission power at the current time, the terminal may not include a value of the power adjustment step size indicated by the TPC instruction in the calculation process (it may also be understood as that the terminal adjusts the value of the power adjustment step size indicated by the received power control instruction to zero and includes the adjusted value zero of the power adjustment step size in the calculation process), thus not adjusting up the signal transmission power value calculated by the terminal device. The problem of additional power consumption overhead of the terminal device that may affect the working performance of the terminal device and cause unexpectedly high receiving power of the base station is solved.

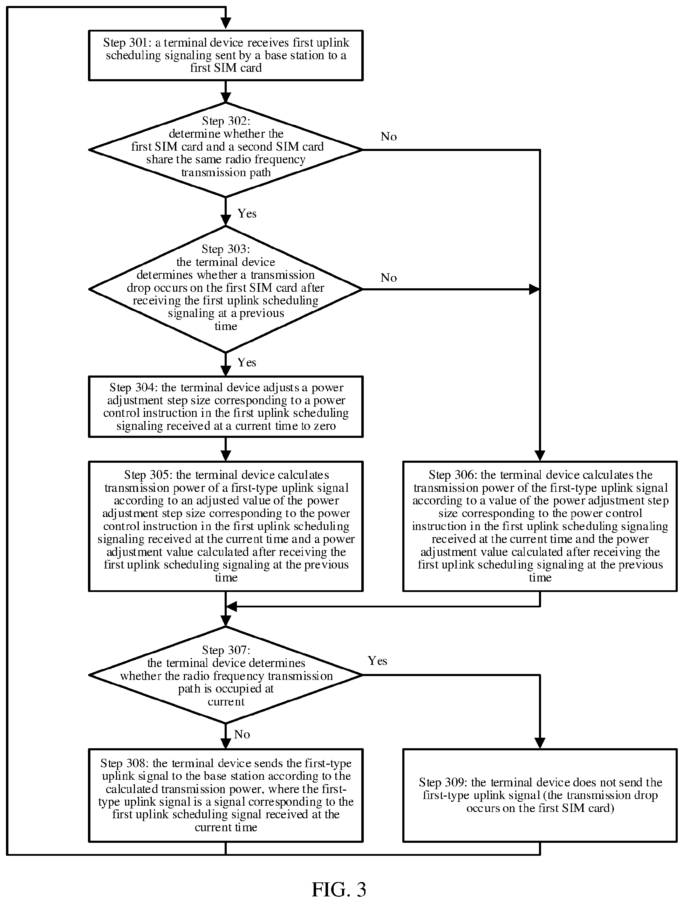

With reference to FIG. 3, a process of a signal transmission power determination method according to an embodiment of this application may be described below. Please refer to FIG. 3. FIG. 3 is a flowchart of a transmission power determination method according to an embodiment of this application. In FIG. 3, a terminal device performs power adjustment by means of accumulation. The specific process is as follows:

Step 301: a terminal device receives first uplink scheduling signaling sent by a base station to a first SIM card.

Specifically, the first uplink scheduling signaling is uplink scheduling signaling sent by the base station to the first SIM card in the terminal device, and the first SIM card is one of the SIM cards in the terminal device. In the embodiment of this application, the terminal device is configured with two SIM cards, and the two SIM cards are both in a working state.

The first uplink scheduling signaling is configured for instructing the terminal device to send a first-type uplink signal, and the first-type uplink signal is a signal corresponding to the first SIM card. When any SIM card in the terminal device is in the working state, the base station may send scheduling information to the SIM card for instructing the SIM card to send a corresponding uplink signal through the terminal device, so as to achieve communication and data transmission between the SIM card in the terminal device and the base station.

The first uplink scheduling signaling may further include that the base station requires the first SIM card to send the first-type uplink signal to the base station through the terminal device. After receiving the first uplink scheduling signaling, the first SIM card may send the first-type uplink signal to the base station. For example, the first uplink scheduling signaling requires the first SIM card to send a PUSCH signal to the base station through the terminal device. Exemplarily, the first-type uplink signal may be a PUSCH uplink signal, or a PUCCH uplink signal, or an SRS uplink signal.

Step 302: the terminal device determines whether the first SIM card and a second SIM card share the same radio frequency transmission path.

Optionally, after receiving the first uplink scheduling instruction, the terminal device may determine whether the first SIM card and the second SIM card share the same radio frequency transmission path. The second SIM card is the other SIM card built into the terminal device. If the first SIM card and the second SIM card share the same radio frequency transmission path, it indicates that the DSDA of the terminal device is a radio frequency sharing mode. The first SIM card and the second SIM card adopt time division multiplexing, and use the same radio frequency transmission path to transmit signals to the base station at different time periods. If the first SIM card and the second SIM card do not share the same radio frequency transmission path, it indicates that the DSDA of the terminal device is a full concurrent dual SIM dual active mode. The first SIM card and the second SIM card may independently use a radio frequency transmission path to transmit signals to the base station.

In a case that the terminal device determines that the first SIM card and the second SIM card share the same radio frequency transmission path, the process proceeds to step 303; and in a case that the terminal device determines that the first SIM card and the second SIM card do not share the same radio frequency transmission path, the process proceeds to step 306.

Step 303: the terminal device determines whether a transmission drop occurs on the first SIM card after receiving the first uplink scheduling signaling at a previous time.

Specifically, the transmission drop refers to the situation that the first SIM card in the terminal device, after receiving the first uplink scheduling signaling at the previous time, does not send the corresponding first-type uplink signal to the base station through the terminal device according to the instruction of the first uplink scheduling signaling.

After the terminal device determines that the first SIM card and the second SIM card share the same radio frequency transmission path, the terminal device may determine whether a transmission drop occurs after receiving the first uplink scheduling signaling at the previous time. That is, whether the first SIM card sends the first-type uplink signal to the base station according to the instruction of the first uplink scheduling signal after the terminal device receives the first uplink scheduling signal at the previous time. Since the first SIM card and the second SIM card share the same radio frequency transmission path, if the priority of the second SIM card is higher than that of the first SIM card, and the second SIM card happens to occupy the radio frequency transmission path to send signals to the base station after the first SIM card receives the first uplink scheduling signaling, the first SIM card may not send the first-type uplink signal to the base station according to the instruction of the first uplink scheduling signaling. In this case, a transmission drop (Tx Drop) occurs on the first SIM card.

Optionally, the terminal device may query a signal transmission record of the first SIM card after receiving the first uplink scheduling signaling at each time by querying historical data in a log. Therefore, it can be determined whether the transmission drop occurs on the first SIM card after the terminal device receives the first uplink scheduling signaling at the previous time. If it is queried based on the signal transmission record that the first SIM card does not send the first-type uplink signal to the base station through the terminal device, it is considered that the transmission drop occurs on the first SIM card. If it is queried based on the signal transmission record that the first SIM card sends the first-type uplink signal to the base station through the terminal device, it is considered that the transmission drop does not occur on the first SIM card.

If yes, the process proceeds to step 304; and if no, the process proceeds to step 306.

Step 304: the terminal device adjusts a power adjustment step size corresponding to a power control instruction in the first uplink scheduling signaling received at a current time to zero.

Specifically, since the radio frequency transmission path is occupied by the second SIM card after the terminal device receives the first uplink scheduling signaling at the previous time, the first SIM card is caused to be unable to send the first-type uplink signal through the radio frequency transmission path. Therefore, if the base station does not receive the first-type uplink signal corresponding to the first uplink scheduling signaling, the base station may determine that it fails to send the first-type uplink signal since the transmission power of the terminal device is not high enough. Therefore, in the first uplink scheduling signaling sent by the base station to the first SIM card at the current time, a power control instruction, i.e., a TPC instruction, that the base station requires the terminal device to adjust up the transmission power of the first-type uplink signal may be included.

Since the terminal device queries that a transmission drop occurs on the first SIM card after receiving the first uplink scheduling instruction at the previous time, the first-type uplink signal is not sent to the base station, having nothing to do with the transmission power of the signal. Therefore, after the terminal device receives the first uplink scheduling signaling sent by the base station, the terminal device may set the power adjustment step size corresponding to the TPC instruction in the uplink scheduling signaling to zero. In this way, when the terminal device calculates the transmission power of the first-type uplink signal, the increment of the power adjustment value is zero, that is, when calculating the transmission power of the first-type uplink signal at the current time, the terminal device may not consider the power adjustment step size in the TPC instruction sent by the base station at the current time, thus avoiding the situations of causing the calculated transmission power value to be too large, increasing the additional power consumption of the terminal device and affecting the performance of the terminal device.

Step 305: the terminal device calculates the transmission power of the first-type uplink signal according to an adjusted value of the power adjustment step size corresponding to the power control instruction in the first uplink scheduling signaling received at the current time and a power adjustment value calculated after receiving the first uplink scheduling signaling at the previous time.

Specifically, the terminal device calculates the transmission power of the first-type uplink signal according to the adjusted value of the power adjustment step size corresponding to the power control instruction in the first uplink scheduling signaling received at the current time and the power adjustment value calculated after receiving the first uplink scheduling signaling at the previous time.

Exemplarily, it is assumed that the power adjustment value $f(i-1)$ calculated by the terminal device after receiving the first uplink scheduling signaling at the previous time is 3 dB, and the adjusted value $\delta_{PUSCH}(i\text{-}K_{PUSCH})$ of the power adjustment step size is zero. Therefore, the power adjustment value $f(i)$ calculated by the terminal device after receiving the first uplink scheduling signaling at the current time is:

$$f(i)=f(i-1)+\delta_{PUSCH}\ (i–K_{PUSCH})=3+0=3\ \mathrm{dB}$$

Then, the terminal device may calculate the calculated value of the transmission power $P_{\text{calculated value}}$ according to formula (2) above, that is,

$$P_{\text{calculated value}}=P_o(j) + \alpha(j)PL(q) + 10\log_{10}(2^{\mu} \cdot M_{RB}) + \Delta_{TF} + f(i)$$

In a case that $P_{\text{calculated value}}$ is greater than or equal to $P_{CMAX}$, $P_{CMAX}$ is used as the transmission power of the signal. In a case that $P_{\text{calculated value}}$ is smaller than $P_{CMAX}$, $P_{\text{calculated value}}$ is used as the transmission power of the signal.

Step 306: the terminal device calculates the transmission power of the first-type uplink signal according to a value of the power adjustment step size corresponding to the power control instruction in the first uplink scheduling signaling received at the current time and the power adjustment value calculated after receiving the first uplink scheduling signaling at the previous time.

Specifically, in a case that the terminal device determines that the first SIM card and the second SIM card do not share the same radio frequency transmission path; or in a case that the terminal device determines that the transmission drop does not occur on the first SIM card after receiving the first uplink scheduling signaling at the previous time, the terminal device may calculate the transmission power of the first-type uplink signal according to the value of the power adjustment step size corresponding to the power control instruction in the first uplink scheduling signaling received at the current time and the power adjustment value calculated after receiving the first uplink scheduling signaling at the previous time.

Specifically, the terminal device queries the power adjustment step size $\delta_{PUSCH}(i\text{-}K_{PUSCH})$ in a TPC command field-power adjustment step size mapping table according to the TPC command field of the TPC instruction in the first uplink scheduling signaling acquired at the current time. Assuming that the TPC command field is 3 and the TPC command field-power adjustment step size mapping table is as shown in Table 1 above, $\delta_{PUSCH}(i\text{-}K_{PUSCH})$ corresponding to the TPC instruction in the first uplink scheduling signaling received at the current time is 3. Similarly, the terminal device may also acquire a power adjustment value $f(i\text{-}1)$ calculated after receiving the first uplink scheduling signaling at the previous time. Assuming that $f(i\text{-}1)$ is 4 dB, the power adjustment value $f(i)$ calculated by the terminal device after receiving the first uplink scheduling signaling at the current time is:

$$f(i) = f(i-1) + \delta_{PUSCH}(i\text{-}K_{PUSCH}) = 4+3 = 7 \text{ dB}$$

Then, the terminal device may calculate the calculated value of the transmission power $P_{\text{calculated value}}$ according to formula (2) above, that is,

$$P_{\text{calculated value}} = P_o(j) + \alpha(j)PL(q) + 10\log_{10}(2^\mu \cdot M_{RB}) + \Delta_{TF} + f(i)$$

In a case that $P_{\text{calculated value}}$ is greater than or equal to $P_{CMAX}$, $P_{CMAX}$ is used as the transmission power of the signal. In a case that $P_{\text{calculated value}}$ is smaller than $P_{CMAX}$, $P_{\text{calculated value}}$ is used as the transmission power of the signal.

Step 307: the terminal device determines whether the radio frequency transmission path is occupied at current.

If no, the process proceeds to step 308. If yes, the process proceeds to step 309.

Step 308: the terminal device sends the first-type uplink signal to the base station according to the calculated transmission power, where the first-type uplink signal is a signal corresponding to the first uplink scheduling signal received at the current time.

Step 309: the terminal device does not send the first-type uplink signal (the transmission drop occurs on the first SIM card).

In a possible implementation, in a case that the terminal device determines that the transmission drop occurs on the first SIM card after receiving the first uplink scheduling signaling at the previous time, the value of the power adjustment step size indicated by the power control instruction in the first uplink scheduling signaling received at the current time may not be considered when calculating the transmission power of the first-type uplink signal. Here, not considering the value of the power adjustment step size indicated by the power control instruction in the first uplink scheduling signaling received at the current time may include the following two situations.

In a first situation, when calculating the power adjustment value $f(i)$ after receiving the first uplink scheduling signaling at the current time, the terminal device directly takes the value of the power adjustment step size at the current time as 0 and inputs it into the calculation, that is, $f(i) = f(i\text{-}1)+0$. Then, the calculated value of the transmission power $P_{\text{calculated}}$ value of the first-type uplink signal is calculated according to formula (2) above.

In a second situation, when calculating the power adjustment value $f(i)$ after receiving the first uplink scheduling signaling at the current time, the terminal device directly sets the value of $f(i)$ to $f(i\text{-}1)$, that is, $f(i) = f(i\text{-}1)$. Then, the calculated value of the transmission power $P_{\text{calculated value}}$ of the first-type uplink signal is calculated according to formula (2) above.

In the embodiment of this application, in a case that the terminal device adopts closed-loop power adjustment and performs power adjustment by means of accumulation, if the first SIM card and the second SIM card in the terminal device share the same radio frequency transmission path, after receiving the first uplink scheduling signaling sent to the first SIM card, the terminal device may query whether a transmission drop occurs on the first SIM card after receiving the first uplink scheduling signaling at the previous time. If the transmission drop occurs, the terminal device considers that there is no need to increase the transmission power of the signal when sending the first-type uplink signal to the base station at the current time. When calculating the transmission power, the TPC instruction in the first uplink scheduling signaling received at the current time is not considered. The power adjustment step size corresponding to the TPC instruction may be prevented from being included in the calculation process of the transmission power, thus avoiding the situations of adjusting up the signal transmission power of the terminal device, increasing the additional power consumption of the terminal device, and affecting the performance of the terminal device.

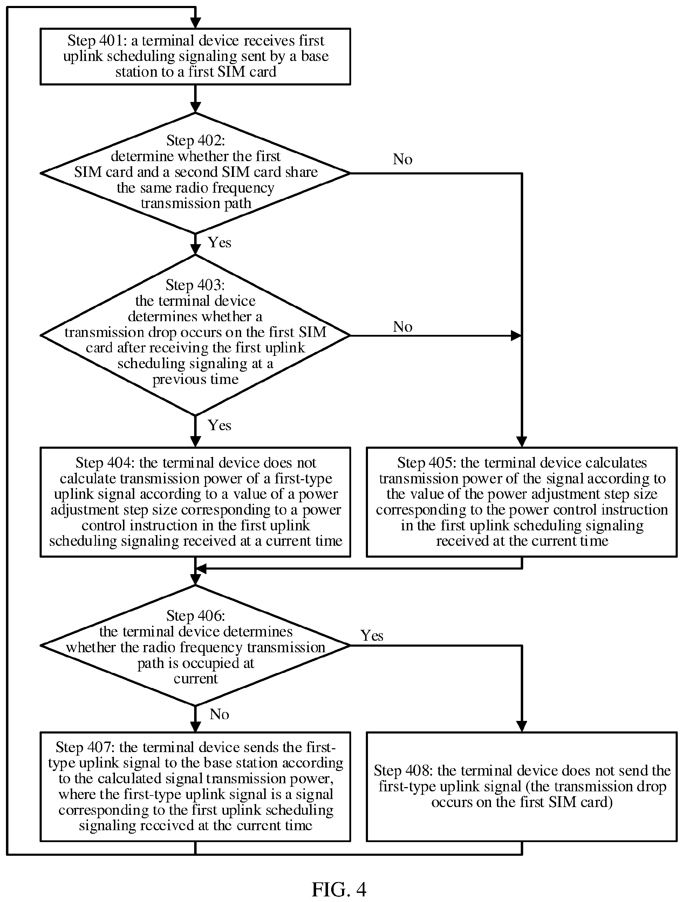

FIG. 3 describes in detail the process that the terminal device calculates the signal transmission power in a case that the terminal device performs power adjustment by means of accumulation in closed-loop power control. With reference to FIG. 4, a process of another transmission power determination method according to an embodiment of this application may be described below. In FIG. 4, the terminal device performs power adjustment by means of absolute value.

Please refer FIG. 4. FIG. 4 is a flowchart of another signal transmission power determination method according to an embodiment of this application. The specific process is as follows.

Step 401: a terminal device receives first uplink scheduling signaling sent by a base station to a first SIM card.

Step 402: the terminal device determines whether the first SIM card and a second SIM card share the same radio frequency transmission path.

If not, the process proceeds to step 405; and if yes, the process proceeds to step 403.

Step 403: the terminal device determines whether a transmission drop occurs on the first SIM card after receiving the first uplink scheduling signaling at a previous time.

If not, the process proceeds to step 405; and if yes, the process proceeds to step 404.

For the relevant description of step 401 to step 403, reference may be made to the relevant description of step 301 to step 303 in the embodiment in FIG. 3, and details are not described herein again.

Step 404: the terminal device does not calculate transmission power of a first-type uplink signal according to a value of the power adjustment step size corresponding to the power control instruction in the first uplink scheduling signaling received at a current time.

Specifically, in a case that the terminal device determines that the transmission drop occurs on the first SIM card after receiving the first uplink scheduling signaling at the previous time, the terminal device does not calculate the transmission power of the signal using the value of the power adjustment step size corresponding to the TPC instruction received at the current time, that is, is set to zero.

Then, the terminal device may calculate the calculated value of the transmission power $P_{\text{calculated value}}$ according to formula (2) above, that is,

$$P_{\text{calculated value}} = P_o(j) + \alpha(j)PL(q) + 10\log_{10}(2^\mu \cdot M_{RB}) + \Delta_{TF} + f(i)$$

In a case that $P_{\text{calculated value}}$ is greater than or equal to $P_{CMAX}$, $P_{CMAX}$ is used as the transmission power of the signal. In a case that $P_{\text{calculated value}}$ is smaller than $P_{CMAX}$, $P_{\text{calculated value}}$ is used as the transmission power of the signal.

Step 405: the terminal device calculates transmission power of the signal according to the value of the power adjustment step size corresponding to the power control instruction in the first uplink scheduling signaling received at the current time.

Specifically, in a case that the terminal device determines that the first SIM card and the second SIM card do not share the same radio frequency transmission path; or in a case that the terminal device determines that the transmission drop does not occur on the first SIM card after receiving the first uplink scheduling signaling at the previous time, the terminal device calculates the transmission power of the signal according to the power control instruction in the first uplink scheduling signaling received at the current time.

Specifically, the terminal device queries the power adjustment step size $\delta_{PUSCH}(i\text{-}K_{PUSCH})$ in a TPC command field-power adjustment step size mapping table according to the TPC command field of the TPC instruction in the first uplink scheduling signaling acquired at the current time. Assuming that the TPC command field is 3 and the TPC command field-power adjustment step size mapping table is as shown in Table 1 above, $\delta_{PUSCH}(i\text{-}K_{PUSCH})$ corresponding to the first uplink scheduling signaling received at the current time is 3. The terminal device may set $f(i)$=3.

Then, the terminal device may calculate the calculated value of the transmission power $P_{\text{calculated value}}$ according to formula (2) above, that is,

$$P_{\text{calculated value}} = P_o(j) + \alpha(j)PL(q) + 10\log_{10}(2^\mu \cdot M_{RB}) + \Delta_{TF} + f(i)$$

In a case that $P_{\text{calculated value}}$ is greater than or equal to $P_{CMAX}$, $P_{CMAX}$ is used as the transmission power of the signal. In a case that $P_{\text{calculated value}}$ is smaller than $P_{CMAX}$, $P_{\text{calculated value}}$ is used as the transmission power of the signal.

Step 406: the terminal device determines whether the radio frequency transmission path is occupied at current.

If not, the process proceeds to step 407; and if yes, the process proceeds to step 408.

Step 407: the terminal device sends the first-type uplink signal to the base station according to the calculated signal transmission power, where the first-type uplink signal is a signal corresponding to the first uplink scheduling signaling received at the current time.

Step 408: the terminal device does not send the first-type uplink signal (the transmission drop occurs on the first SIM card).

In the embodiment of this application, the terminal device performs power adjustment by means of absolute value in closed-loop power control. In a case that the first SIM card and the second SIM card of the terminal device use the same radio frequency transmission path, after receiving the first uplink scheduling signaling sent by the base station, the terminal device may determine whether a transmission drop occurs after receiving the first uplink scheduling signaling at the previous time. If yes, the terminal device sets the power adjustment value $f(i)$ to 0 dB when calculating the transmission power of the signal at the current time. Then, the transmission power of the signal is calculated based on $f(i)$. If no, the terminal device acquires the value of the power adjustment step size from the TPC instruction in the first uplink scheduling signaling received at the current time, and uses the $\delta_{PUSCH}(i - K_{PUSCH})$ as the power adjustment value $f(i)$. Then, the transmission power of the signal is calculated based on $f(i)$. In this way, the terminal device may be prevented from adjusting up the unnecessary signal transmission power based on the TPC instruction sent by the base station after the transmission drop occurs, thus effectively avoiding the problem of increasing the additional power overhead of the terminal device and affecting the performance of the terminal device.

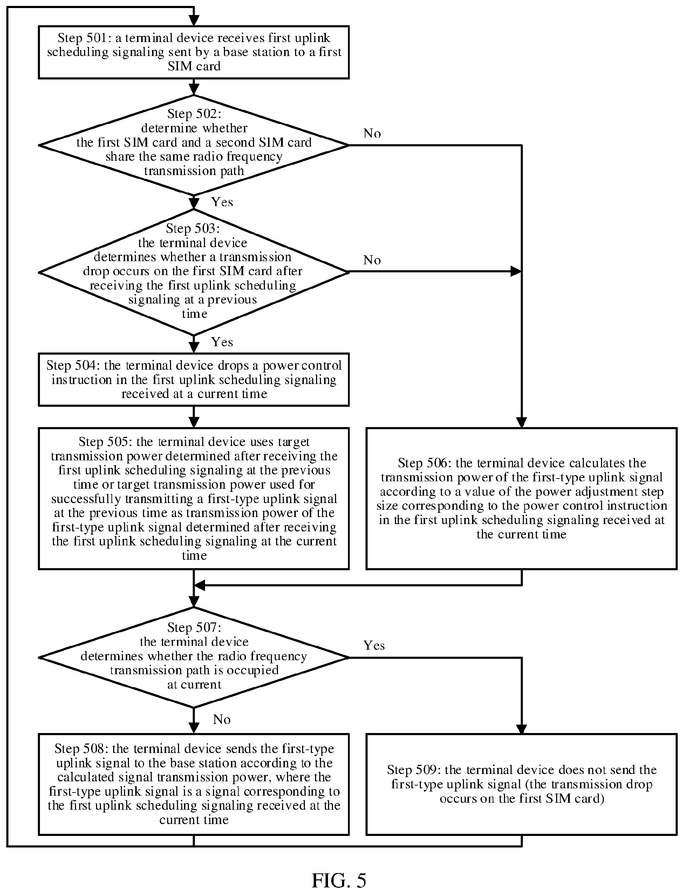

FIG. 4 describes in detail the process that the terminal device calculates the transmission power of the signal in a case that the terminal device performs power adjustment by means of absolute value in closed-loop power control. With reference to FIG. 5, a process of another signal transmission power determination method according to an embodiment of this application may be described below. In FIG. 5, the terminal device may perform adjustment by means of absolute value, and may also perform power adjustment by means of accumulated value. The specific process is as follows:

Step 501: a terminal device receives first uplink scheduling signaling sent by a base station to a first SIM card.
Step 502: the terminal device determines whether the first SIM card and a second SIM card share the same radio frequency transmission path.
Step 503: the terminal device determines whether a transmission drop occurs on the first SIM card after receiving the first uplink scheduling signaling at a previous time.

If yes, the process proceeds to step 504; and if no, the process proceeds to step 506.

Step 504: the terminal device drops a power control instruction in the first uplink scheduling signaling received at a current time.

For the relevant description of step 501 to step 504, reference may be made to the relevant description of step 301 to step 304 in the embodiment in FIG. 3, and details are not described herein again.

Step 505: the terminal device uses target transmission power determined after receiving the first uplink scheduling signaling at the previous time or target transmission power used for successfully transmitting a first-type uplink signal at the previous time as transmission power of the first-type uplink signal determined after receiving the first uplink scheduling signaling at the current time.

Specifically, in a case that the terminal device determines that the transmission drop occurs on the first SIM card after receiving the first uplink scheduling signaling at the previous time, the terminal device may directly use the target transmission power determined after receiving the first uplink scheduling signaling at the previous time or the target transmission power used for successfully transmitting the first-type uplink signal at the previous time as the transmission power of the first-type uplink signal determined after receiving the first uplink scheduling signaling at the current time. In this way, computing resources of the terminal device may be saved and the working performance of the terminal device may be improved.

Exemplarily, assuming that the terminal device receives the first uplink scheduling signaling for three times before the current time, respectively uplink scheduling signaling 1, uplink scheduling signaling 2, and uplink scheduling signaling 3 in chronological order, the transmission power calculated by the terminal device according to the three uplink scheduling signaling is respectively: power 1, power 2, and power 3. Assuming that a transmission drop of the first-type uplink signal occurs on the first SIM card after calculating power 2 and power 3, and no transmission drop of the first-type uplink signal occurs after calculating power 1, the situation that the terminal device may directly use the target transmission power determined after receiving the first uplink scheduling signaling at the previous time as the transmission power of the first-type uplink signal determined after receiving the first uplink scheduling signaling at the current time may be understood as: power 3 is determined as the transmission power of the first-type uplink signal at the current time; and the situation that the terminal device directly uses the target transmission power used for successfully transmitting the first-type uplink signal as the transmission power of the first-type uplink signal determined after receiving the first uplink scheduling signaling at the current time may be understood as: power 1 is determined as the transmission power of the first-type uplink signal at the current time.

Step 506: the terminal device calculates the transmission power of the first-type uplink signal according to the value of the power adjustment step size corresponding to the power control instruction in the first uplink scheduling signaling received at the current time.

Specifically, in a case that the terminal device performs power adjustment by means of accumulated value in closed-loop power control, the terminal device may calculate the transmission power of the first-type uplink signal according to the value of the power adjustment step size corresponding to the power control instruction in the first uplink scheduling signaling received by the first SIM card at the current time and the power adjustment value calculated after receiving the first uplink scheduling signaling at the previous time. For the specific calculation method, reference may be made to step 306 in the embodiment in FIG. 3, and details are not described herein again.

In a case that the terminal device performs power adjustment by means of absolute value in closed-loop power control, the terminal device may calculate the transmission power of the signal according to the value of the power adjustment step size corresponding to the power control instruction in the first uplink scheduling signaling received by the first SIM card at the current time. For the specific calculation method, reference may be made to step 405 in the embodiment in FIG. 4, and details are not described herein again.

Step 507: the terminal device determines whether the radio frequency transmission path is occupied at current.

If yes, the process proceeds to step 509; and if no, the process proceeds to step 508.

Step 508: the terminal device sends the first-type uplink signal to the base station according to the calculated signal transmission power, where the first-type uplink signal is a signal corresponding to the first uplink scheduling signaling received at the current time.

Step 509: the terminal device does not send the first-type uplink signal (the transmission drop occurs on the first SIM card).

Hardware structures of the terminal device 100 in the embodiments of this application may be described below.

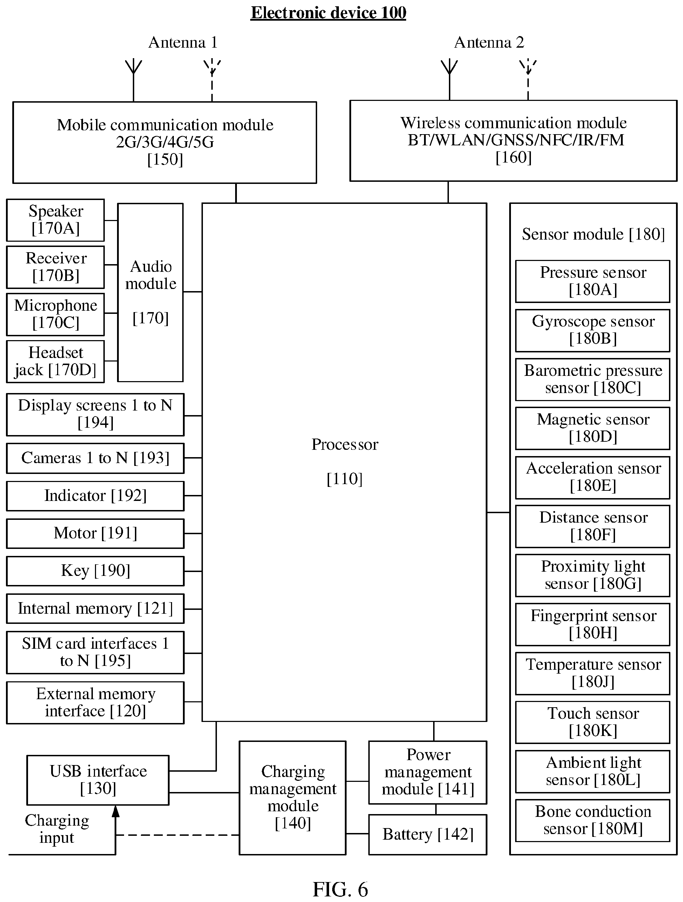

FIG. 6 is a schematic structural diagram of an exemplary terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an proximity light sensor 180G, a fingerprint sensor 180H, a temperature sensor 180J, a touch sensor 180K, an ambient light sensor 180L, a bone conduction sensor 180M, and the like.

It may be understood that the structure shown in the embodiment of this application does not constitute a specific limitation on the terminal device 100. In some other embodiments of this application, the terminal device 100 may include more or fewer components than those shown in FIG. 6, or may combine some components or split some components, or have a different component arrangement. The components shown in FIG. 6 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal device 100. The controller may generate an operation control signal based on an instruction operation code and a time-sequence signal, and complete the control of acquiring and executing instructions.

A memory may also be arranged in the processor 110, and is configured to store instructions and data. In some embodiments, the memory in the processor 110 is a cache memory. The memory may store instructions or data that is just used or used cyclically by the processor 110. If the processor 110 needs to use the instructions or the data again, the processor may directly invoke the instructions or the data from the memory. This avoids repeated accessing and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The I2C interface is a two-way synchronization serial bus, and includes a serial data line (serial data line, SDA) and a serial clock line (derail clock line, SCL). In some embodiments, the processor 110 may include multiple groups of I2C buses. The processor 110 may be coupled to the touch sensor 180K, a charger, a flash light, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the terminal device 100.

The I2S interface may be configured to perform audio communication. In some embodiments, the processor 110 may include multiple groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 by using the I2S interface, to implement a function of answering a call by using a Bluetooth headset.

The PCM interface may also be configured for audio communication, to sample, quantize, and encode an analog signal. In some embodiments, the audio module 170 and the wireless communication module 160 may be coupled by using a PCM bus interface. In some embodiments, the audio module 170 may also transmit an audio signal to the wireless communication module 160 by using the PCM interface, to implement the function of answering a call through the Bluetooth headset. Both the I2S interface and the PCM interface may be configured to perform audio communication.

The UART interface is a universal serial data bus for asynchronous communication. The bus may be a two-way communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 via the UART interface, to implement a function of music playback by using a Bluetooth headset.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the terminal device 100. The processor 110 communicates with the display screen 194 by using the DSI interface, to implement a display function of the terminal device 100.

The GPIO interface may be configured by software. The GPIO interface may be configured as a control signal, or may be configured as a data signal. In some embodiments, the GPIO interface may be configured to connect the processor 110 to the camera 193, the display screen 194, the wireless communication module 160, the audio module 170, the sensor module 180, and the like. The GPIO interface may be further configured as the I2C interface, the I2S interface, the UART interface, the MIPI interface, or the like.

The USB interface 130 is an interface complies with a USB standard specification, and may be specifically a Mini USB interface, a Micro USB interface, a USB Type C interface, or the like. The USB interface 130 may be configured to connect to a charger to charge the terminal device 100, or may be configured to perform data transmission between the terminal device 100 and a peripheral device. The interface may also be configured to connect to a headset, to play audio through the headset. The interface may be further configured to connect to another terminal device, such as an AR device.

It may be understood that an interface connection relationship between the modules illustrated in the embodiment of this application is merely an example for description, and does not constitute a limitation on a structure of the terminal device 100. In some other embodiments of this application, the terminal device 100 may use an interface connection method different from that in the above embodiment, or use a combination of multiple interface connection methods.

The charging management module 140 is configured to receive a charging input from the charger. The charger may be a wireless charger, or may be a wired charger. In some embodiments of wired charging, the charging management module 140 may receive a charging input from the wired charger by using the USB interface 130. In some embodiments of wireless charging, the charging management module 140 may receive a wireless charging input by using a wireless charging coil of the terminal device 100. When charging the battery 142, the charging management module 140 may further supply power to the terminal device by using the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, an external memory, the display screen 194, the camera 193, the wireless communication module 160, and the like. The power management module 141 may further be configured to monitor parameters such as a battery capacity, the number of battery cycles, and a battery health state (power leakage and impedance). In some other embodiments, the power management module 141 may alternatively be arranged in the processor 110. In some other embodiments, the power management module 141 and the charging management module 140 may also be arranged in the same device.

A wireless communication function of the terminal device 100 may be implemented by means of the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Structures of the antenna 1 and the antenna 2 in FIG. 6 are merely examples. Each antenna in the terminal device 100 may be configured to cover one or more communication frequency bands. Different antennas may be further multiplexed to improve the utilization rate of the antennas. For example, the antenna 1 may be multiplexed as a diversity antenna of a wireless local area network. In some other embodiments, the antennas may be used with a tuning switch.

The mobile communication module 150 may provide a solution for wireless communication including 2G/3G/4G/5G and the like applied to the terminal device 100. The mobile communication module 150 may include at least one filter, switch, power amplifier, low noise amplifier (Low Noise Amplifier, LNA), and the like. The mobile communication module 150 may receive an electromagnetic wave through the antenna 1, perform processing such as filtering and amplification on the received electromagnetic wave, and transmit the processed electromagnetic wave to the modem processor for demodulation. The mobile communication module 150 may further amplify a signal modulated by the modem processor, and convert an amplified signal into an electromagnetic wave via the antenna 1 for radiation. In some embodiments, at least some function modules of the mobile communication module 150 may be arranged in the processor 110. In some embodiments, at least some of the functional modules of the mobile communication module 150 may be arranged in the same device as at least some of modules of the processor 110.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to an application processor. The application processor outputs a sound signal through an audio device (not limited to a speaker 170A, a receiver 170B, and the like), or displays an image or a video through the display screen 194. In some embodiments, the modem processor may be an independent component. In some other embodiments, the modem processor may be independent of the processor 110, and may be arranged in the same device as the mobile communication module 150 or another functional module.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation on the electromagnetic wave signal and filters the electromagnetic wave signal, and sends a processed signal to the processor 110. The wireless communication module 160 may further receive a to-be-sent signal from the processor 110, perform frequency modulation and amplification on the signal, and convert, by using the antenna 2, the signal into electromagnetic waves for radiation.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function by means of the GPU, the display screen 194, the application processor, etc. The GPU is a microprocessor for image processing and connects the display screen 194 and the application processor. The GPU is configured to perform mathematical and geometric computing for graphics rendering. The processor 110 may include one or more GPUs, and the one or more GPUs execute program instructions to generate or change displayed information.

The display screen 194 is configured to display an image, a video, or the like. The display screen 194 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N display screens 194, where N is a positive integer greater than one.

The terminal device 100 may implement a photographing function by means of the ISP, the camera 193, the video encoder and decoder, the GPU, the display screen 194, the application processor, and the like.

The ISP is configured to process data fed back by the camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise and brightness of the image. The ISP may further optimize parameters such as exposure and a color temperature of a shooting scenario. In some embodiments, the ISP may be arranged in the camera 193.

The camera 193 is configured to capture a still image or video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal device 100 may include one or N cameras 193, where N is a positive integer greater than one.

The digital signal processor is configured to process digital signals. In addition to digital image signals, it may further process other digital signals. For example, when the terminal device 100 performs frequency point selection, the digital signal processor is configured to perform Fourier transformation and the like on frequency point energy.

The video encoder and decoder are configured to compress or decompress a digital video. The terminal device 100 can support one or more video encoder and decoder. In this way, the electronic device 100 may play or record videos in multiple encoding formats, for example, moving picture experts group (moving picture experts group, MPEG) 1, MPEG 2, MPEG 3, MPEG 4, and the like.

The NPU is a neural-network (neural-network, NN) computing processor, quickly processes input information by referring to a structure of a biological neural network, for example, a transmission mode between neurons in a human brain, and may further continuously perform self-learning. The NPU may be configured to implement an application such as intelligent cognition of the electronic device 100, for example, image recognition, face recognition, voice recognition, text understanding, and the like.

The external memory interface 120 may be configured to connect to an external storage card, for example, a Micro SD card, to expand the storage capability of the terminal device 100. The external storage card communicates with the processor 110 through the external memory interface 120, to implement a data storage function, for example, storing files such as music and videos into the external storage card.

The internal memory 121 may be configured to store a computer-executable program code, and the computer-executable program code includes instructions. The processor 110 runs the instructions stored in the internal memory 121, to perform various functional applications and data processing of the terminal device 100. The internal memory 121 may include a program storage area and a data storage area. The program storage area may store an operating system, an application required by at least one function (such as a sound playback function and an image display function), and the like. The data storage area may store data (for example, audio data, a phone book, or the like) created during use of the terminal device 100. In addition, the internal memory 121 may include a high-speed random access memory, and may also include a nonvolatile memory, for example, at least one magnetic disk storage device, flash memory device, universal flash storage (universal flash storage, UFS) or the like.

The terminal device 100 may implement an audio function through the audio module 170, the speaker 170A, the receiver 170B, the microphone 170C, the headset jack 170D, the application processor, and the like, for example, music playback, recording, and the like.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be arranged in the processor 110, or some functional modules of the audio module 170 are arranged in the processor 110.

The speaker 170A, also referred to as a "loudspeaker", is configured to convert an audio electrical signal into a sound signal. The terminal device 100 may listen to music or listen to a hands-free call through the speaker 170A.

The receiver 170B, also referred to as "ear piece", is configured to convert an electrical audio signal into a sound signal. When the terminal device 100 answers a call or voice information, the voice may be answered by placing the receiver 170B close to an ear.

The microphone 170C, also referred to as "voice tube" or "mike", is configured to convert a sound signal into an electrical signal. When making a call or sending voice information, a user may make a sound approaching the microphone 170C through the mouth, to input a sound signal into the microphone 170C. At least one microphone 170C may be arranged in the terminal device 100. In some other embodiments, two microphones 170C may be arranged in the terminal device 100, to collect a sound signal and further implement a noise reduction function. In some other embodiments, three, four, or more microphones 170C may be arranged in the terminal device 100, to collect a sound signal, reduce noise, identify a sound source, implement a directional recording function, or the like.

The headset jack 170D is configured to be connected to a wired headset. The headset jack 170D may be a USB interface 130, or may be a 3.5mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be arranged at the display screen 194. The pressure sensor 180A may be of any type. For example, it is a resistive pressure sensor, an inductive pressure sensor, or a capacitive pressure sensor. The capacitive pressure sensor may include at least two parallel plates made of a conductive material. When force is applied onto the pressure sensor 180A, capacitance between electrodes changes. The terminal device 100 determines intensity of the pressure based on the change in the capacitance. When a touch operation is performed on the display screen 194, the terminal device 100 detects the intensity of the touch operation through the pressure sensor 180A. The terminal device 100 may also calculate a touch position based on a detection signal of the pressure sensor 180A. In some embodiments, touch operations that are performed at the same touch position but have different touch operation intensities may correspond to different operation instructions. For example, when a touch operation whose touch operation intensity is less than a first pressure threshold is performed on a short message application icon, an instruction for checking a short message is executed. When a touch operation whose touch operation intensity is greater than or equal to the first pressure threshold is performed on the short message application icon, an instruction of creating a new short message is executed.

The gyroscope sensor 180B may be configured to determine a moving posture of the terminal device 100. In some embodiments, angular velocities of the terminal device 100 around three axes (that is, x, y, and z axes) may be determined through the gyroscope sensor 180B. The gyroscope sensor 180B may be configured for image stabilization during shooting. For example, when the shutter is pressed, the gyroscope sensor 180B detects an angle at which the terminal device 100 jitters, calculates a distance for which a lens module needs to compensate according to the angle, and allows the lens to cancel the jitter of the terminal device 100 through reverse motion, to implement image stabilization. The gyroscope sensor 180B may also be used in navigation and motion sensing game scenarios.

The barometric pressure sensor 180C is configured to measure barometric pressure. In some embodiments, the terminal device 100 computes the altitude according to the barometric pressure value measured by the barometric pressure sensor 180C, so as to assist in positioning and navigation.

The magnetic sensor 180D includes a Hall sensor. The terminal device 100 may detect opening and closing of a flip leather case by means of the magnetic sensor 180D. In some embodiments, when the terminal device 100 is a flip phone, the terminal device 100 may detect opening and closing of a flip cover through the magnetic sensor 180D. Further, features such as automatic unlocking of the flip cover are set based on the detected opening and closing state of the leather case or the flip cover.

The acceleration sensor 180E may detect the magnitude of acceleration of the terminal device 100 in all directions (usually on three axes). The magnitude and direction of gravity may be detected when the terminal device 100 is static. It may be further configured to identify a posture of the terminal device, for the purpose of applications such as landscape and portrait orientation switching and pedometer.

The distance sensor 180F is configured to measure a distance. The terminal device 100 may measure the distance by means of infrared light or laser light. In some embodiments, in a photographing scenario, the terminal device 100 may measure the distance through the distance sensor 180F to implement fast focusing.

The proximity light sensor 180G may include, for example, a light-emitting diode (LED) and an optical detector, such as a photodiode. The light-emitting diode may be an infrared light-emitting diode. The terminal device 100 emits infrared light through the light emitting diode. The terminal device 100 uses the photodiode to detect infrared reflected light from an object nearby. When sufficient reflected light is detected, it may be determined that there is an object near the terminal device 100. When insufficient reflected light is detected, the terminal device 100 may determine that there is no object near the terminal device 100. The terminal device 100 may detect, by using the proximity light sensor 180G, that the user holds the terminal device 100 close to an ear to make a call, to automatically turn off the screen for power saving. The proximity light sensor 180G may be further configured to automatically unlock and lock the screen in a leather case mode and a pocket mode.

The ambient light sensor 180L is configured to sense ambient light brightness. The terminal device 100 may adaptively adjust the brightness of the display screen 194 according to the sensed ambient light brightness. The ambient light sensor 180L may be further configured to automatically adjust white balance during photographing. The ambient light sensor 180L may further cooperate with the proximity light sensor 180G to detect whether the terminal device 100 is in a pocket to prevent a false touch.

The fingerprint sensor 180H is configured to collect a fingerprint. The terminal device 100 may use a feature of the collected fingerprint to implement fingerprint-based unlocking, accessing an application lock, fingerprint-based photographing, fingerprint-based call answering, and the like.

The temperature sensor 180J is configured to detect temperature. In some embodiments, the terminal device 100 executes a temperature processing policy according to the temperature detected by the temperature sensor 180J. For example, when the temperature reported by the temperature sensor 180J exceeds a threshold, the terminal device 100 may lower the performance of the processor located near the temperature sensor 180J to reduce the power consumption, so as to implement thermal protection. In some other embodiments, when the temperature is below another threshold, the terminal device 100 may heat the battery 142 to prevent low temperature from causing the terminal device 100 to shut down abnormally. In some other embodiments, when the temperature is lower than yet another threshold, the terminal device 100 may boost the output voltage of the battery 142 to avoid abnormal shutdown due to low temperature.

The touch sensor 180K is also referred to as a "touch panel". The touch sensor 180K may be arranged at the display screen 194, and the touch sensor 180K and the display screen 194 form a touchscreen, which is also referred to as a "touch screen". The touch sensor 180K is configured to detect a touch operation on or near the touch sensor. The touch sensor may transfer the detected touch operation to the application processor, to determine the touch event type. A visual output related to a touch operation may be provided through the display screen 194. In some other embodiments, the touch sensor 180K may also be arranged on a surface of the terminal device 100 at a position different from that of the display screen 194.

The bone conduction sensor 180M may acquire a vibration signal. In some embodiments, the bone conduction sensor 180M may acquire a vibration signal of a vibrating bone block of a human body's vocal part. The bone conduction sensor 180M may also come into contact with a human pulse to receive a blood pressure beating signal. In some embodiments, the bone conduction sensor 180M may alternatively be arranged in a headset, to form a bone conduction headset. The audio module 170 may parse out a voice signal based on the vibration signal of the vibration bone of the vocal-cord part that is obtained by the bone conduction sensor 180M, to implement a voice function. The application processor may parse heart rate information based on the blood pressure pulsation signal acquired by the bone conduction sensor 180M, to implement a heart rate measurement function.

The key 190 includes a power-on key, a volume key, and the like. The key 190 may be a mechanical key, or may be a touch key. The terminal device 100 may receive a key input, and generate a key signal input related to a user setting and function control of the terminal device 100.

The motor 191 may generate a vibration prompt. The motor 191 may be configured to provide a vibration prompt for an incoming call, and may be further configured to provide vibration feedback for a touch. For example, touch operations applied to different applications (for example, photographing, audio playback, and the like) may correspond to different vibration feedback effects. For touch operations performed in different regions of the display screen 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may also be configured to indicate a message, a missed call, a notification, and the like.

The SIM card interface 195 is configured to connect an SIM card. The SIM card may be inserted into the SIM card interface 195 or plugged from the SIM card interface 195 to come into contact with or be separated from the terminal device 100. The terminal device 100 may support one or N SIM card interfaces, where N is a positive integer greater than one. The SIM card interface 195 may support a Nano SIM card, a Micro SIM card, an SIM card, or the like. Multiple cards may be inserted into the same SIM card interface 195 at the same time. The multiple cards may be of the same type or different types. The SIM card interface 195 may further be compatible with different types of SIM cards. The SIM card interface 195 may also be compatible with an external memory card. The terminal device 100 interacts with a network through the SIM card, to implement a call function, a data communication function, and the like. In some embodiments, the terminal device 100 adopts an eSIM, that is, an embedded SIM card. The eSIM card may be embedded into the terminal device 100, and cannot be separated from the terminal device 100.

A software system of the terminal device 100 may adopt a layered architecture, an event-driven architecture, a micro-kernel architecture, a micro-service architecture, or a cloud architecture. In this embodiment of this application, a software structure of the terminal device 100 will be exemplarily described by taking an Android system of the layered architecture as an example.

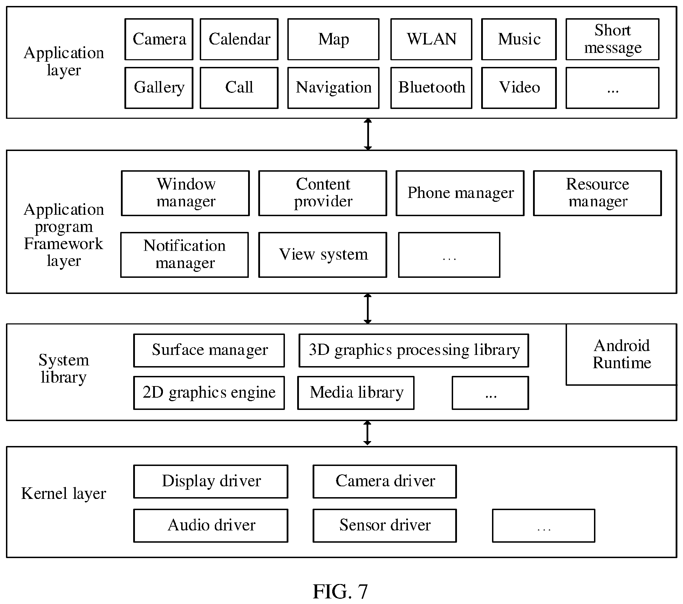

FIG. 7 is a block diagram of a software structure of a terminal device 100 according to an embodiment of this application. In the layered architecture, software is divided into multiple layers, and each layer has a clear role and task. The layers communicate with each other through a software interface. In some embodiments, the Android system is divided into four layers, namely, an application program layer, an application program framework layer, an Android runtime (Android runtime), a system library, and a kernel layer from top to bottom. The application program layer may include a series of application program packages.

Referring to FIG. 7, the application program packages may include application programs such as a camera, a gallery, a calendar, a call, a map, a navigator, a WLAN, a Bluetooth, music, a video and a short message.

The application program framework layer provides an application programming interface (Application Programming Interface, API) and a programming framework for the application programs at the application program layer. The application framework layer includes some predefined functions.

Referring to FIG. 7, the application framework layer may include a window manager, a content provider, a view system, a phone manager, a resource manager, a notification manager, and the like.

The window manager is configured to manage a window program. The window manager may acquire the size of the display screen, determine whether there is a status bar, lock the screen, capture the screen, and the like.

The content provider is configured to store and acquire data, and enable the data to be accessible by an application program. The data may include a video, an image, an audio, a phone call made and answered, a browsing history, favorites, a phone book, and the like.

The view system includes visual controls such as a control for displaying a text and a control for displaying an image. The view system may be configured to construct an application program. A display interface may be composed of one or more views. For example, a display interface including a message notification icon may include a view for displaying a text and a view for displaying an image.

The phone manager is configured to provide a communication function of the terminal device 100, for example, call status management (including connecting, hanging-up, and the like).

The resource manager provides various resources for an application program, such as a localized character string, an icon, a picture, a layout file, and a video file.

The notification manager enables an application program to display notification information in a status bar, may be configured to convey a notification-type message, and may automatically disappear after the message is displayed for a short period of time without user interaction. For example, the notification manager is configured to notify download completion, a message prompt, and the like. The notification manager may also be a notification that appears in a top status bar of the system in the form of a graph or scroll bar text, for example, a notification of an application program running in the background, or may be a notification that appears on the screen in the form of a dialog window. For example, text information is prompted in the status bar, an alert sound is made, the terminal device vibrates, or an indicator light blinks.

The Android runtime includes a core library and a virtual machine. The Android runtime is responsible for scheduling and managing an Android system.

The core library includes two parts. One part is a performance function that the Java language needs to invoke, and the other part is a core library of Android.

The application program layer and the application program framework layer are run in the virtual machine. The virtual machine executes Java files of the application program layer and the application program framework layer as binary files. The virtual machine is configured to perform functions such as object life cycle management, stack management, thread management, security and exception management, and garbage collection.

The system library may include multiple function modules, For example, a surface manager (surface manager), media libraries (media libraries), a three-dimensional graphics processing library (for example, OpenGL ES), a 2D graphics engine (for example, SGL), etc.

The surface manager is configured to manage a display subsystem, and provide fusion of 2D and 3D layers for multiple application programs.

The media library supports playback and recording of multiple commonly used audio and video formats, static image files, etc. The media library may support multiple audio and video encoding formats, for example, MPEG4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer at least includes a display driver, a camera driver, an audio driver, and a sensor driver.

It is to be understood that for the foregoing method embodiments, for ease of description, the method embodiments are described as a series of action combinations. However, those skilled in the art need to know that the present invention is not limited to any described sequence of actions. In addition, those skilled in the art also need to know that all embodiments described in the description are exemplary embodiments, and the related actions are not necessarily mandatory to the present invention.

The operations of the methods in the embodiments of this application may be adjusted in terms of sequence, combined, and deleted according to the actual needs, and may also be freely combined to obtain different embodiments to achieve different technical effects. The different embodiments obtained by adjusting in terms of sequence, combining, and deleting the steps in the methods in the embodiments of this application, or by freely combining them, should still fall within the scope of protection of this application.

The modules in the apparatuses in the embodiments of this application may be combined, divided, and deleted according to the actual needs.

The implementations of this application may be freely combined to achieve different technical effects.

All or some of the embodiments may be implemented by means of software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, the processes or functions according to this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, through a coaxial cable, an optical fiber, or a digital subscriber line) or in a wireless manner (for example, through infrared rays, radio, or microwave). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

Those skilled in the art may understand that all or some of the processes in the methods in the embodiments may be implemented through a computer program instructing related hardware. The program may be stored in the computer-readable storage medium. When the program is executed, the processes in the method embodiments may be performed. The storage medium includes various mediums that can store a program code, such as ROMs, RAMs, magnetic disks, or optical disks.

In conclusion, what are described above are merely embodiments of the technical solutions of the present invention, and are not intended to limit the scope of protection of the present invention. Any modification, equivalent replacement, improvement, and the like made based on the disclosure of the present invention still fall within the scope of protection of the present invention.

## Claims

1.    A transmission power determination method applied to a terminal device, in a case that the terminal device is configured with a first SIM card and a second SIM card, the method comprising:

receiving, by the terminal device, first uplink scheduling signaling for scheduling a first-type uplink signal, wherein the first uplink scheduling signaling is uplink scheduling signaling sent to the first SIM card, the first uplink scheduling signaling comprises a power control instruction, the power control instruction is configured for instructing the terminal device to determine target transmission power based on the power control instruction, and the target transmission power is transmission power at which the first SIM card sends the first-type uplink signal through the terminal device;

in a case that the first SIM card and the second SIM card share the same radio frequency transmission path, if a transmission drop of the first-type uplink signal occurs on the first SIM card after the first SIM card receives the first uplink scheduling signaling at a previous time, adjusting, by the terminal device, a value of a power adjustment step size indicated by the power control instruction in the first uplink scheduling signaling received at a current time to 0; and

determining, by the terminal device, the target transmission power based on an adjusted value of the power adjustment step size corresponding to the power control instruction in the first uplink scheduling signaling received at the current time.

2.    The method according to claim 1, wherein the determining, by the terminal device, the target transmission power based on an adjusted value of the power adjustment step size corresponding to the power control instruction in the first uplink scheduling signaling received at the current time specifically comprises:

acquiring, by the terminal device, a power adjustment value calculated after receiving the first uplink scheduling signaling at the previous time;

calculating a first power adjustment value corresponding to the first uplink scheduling signaling received at the current time based on the power adjustment value calculated after receiving the first uplink scheduling signaling at the previous time and the adjusted value of the power adjustment step size corresponding to the power control instruction in the first uplink scheduling signaling received at the current time, wherein the first power adjustment value corresponds to a scenario that the power adjustment value is determined by means of accumulation; and

calculating the target transmission power based on the first power adjustment value.

3.    The method according to claim 1, wherein the determining, by the terminal device, the target transmission power based on an adjusted value of the power adjustment step size corresponding to the power control instruction in the first uplink scheduling signaling received at the current time specifically comprises:

> setting, by the terminal device, a second power adjustment value corresponding to the first uplink scheduling signaling received at the current time to be equal to zero, wherein the second power adjustment value corresponds to a scenario that the power adjustment value is determined by means of absolute value; and calculating the target transmission power based on the second power adjustment value.

4. The method according to any one of claims 1 to 3, further comprising:

> in a case that the first SIM card and the second SIM card share the same radio frequency transmission path, if the transmission drop of the first-type uplink signal does not occur on the first SIM card after the first SIM card receives the first uplink scheduling signaling at the previous time, determining, by the terminal device, a first power adjustment step size corresponding to the scenario that the power adjustment value is determined by means of accumulation based on a TPC command field in the power control instruction in the first uplink scheduling signaling received at the current time;
> acquiring, by the terminal device, the power adjustment value calculated after receiving the first uplink scheduling signaling at the previous time;
> calculating a third power adjustment value corresponding to the first uplink scheduling signaling received at the current time based on the power adjustment value calculated after receiving the first uplink scheduling signaling at the previous time and the first power adjustment step size, wherein the third power adjustment value corresponds to the scenario that the power adjustment value is determined by means of accumulation; and
> calculating the target transmission power based on the third power adjustment value.

5. The method according to any one of claims 1 to 4, wherein after the terminal device determines the target transmission power based on the adjusted value of the power adjustment step size corresponding to the power control instruction in the first uplink scheduling signaling received at the current time, the method further comprises:

> determining whether the radio frequency transmission path is occupied;
> if no, sending the first-type uplink signal according to the target transmission power; and
> if yes, not sending the first-type uplink signal, wherein the first-type uplink signal is a signal to be sent by the terminal device instructed by the first uplink scheduling signaling received at the current time.

6. The method according to any one of claims 1 to 5, wherein the transmission drop of the first-type uplink signal comprises: the first SIM card does not send a signal to be sent by the terminal device instructed by the first uplink scheduling signaling received at the previous time after receiving the first uplink scheduling signaling for scheduling the first-type uplink signal at the previous time.

7. The method according to any one of claims 1 to 3, further comprising:

> in a case that the first SIM card and the second SIM card share the same radio frequency transmission path, if the transmission drop of the first-type uplink signal does not occur on the first SIM card after the first SIM card receives the first uplink scheduling signaling at the previous time, determining, by the terminal device, a second power adjustment step size corresponding to the scenario that the power adjustment value is determined by means of absolute value based on a TPC command field in the power control instruction in the first uplink scheduling signaling received at the current time;
> setting, by the terminal device, a fourth power adjustment value corresponding to the first uplink scheduling signaling received at the current time to be equal to the second power adjustment step size, wherein the fourth power adjustment value corresponds to the scenario that the power adjustment value is determined by means of absolute value; and
> calculating the target transmission power based on the fourth power adjustment value.

8. A transmission power determination method applied to a terminal device, in a case that the terminal device is configured with a first SIM card and a second SIM card, the method comprising:

> receiving, by the terminal device, first uplink scheduling signaling for scheduling a first-type uplink signal, wherein the first uplink scheduling signaling is uplink scheduling signaling sent to the first SIM card, the first uplink scheduling signaling comprises a power control instruction, the power control instruction is configured for instructing the terminal device to determine target transmission power based on the power control instruction, and the target transmission power is transmission power at which the first SIM card sends the first-type uplink signal through the terminal device; and

in a case that the first SIM card and the second SIM card share the same radio frequency transmission path, if a transmission drop of the first-type uplink signal occurs on the first SIM card after the first SIM card receives the first uplink scheduling signaling at a previous time, not considering, by the terminal device, a value of a power adjustment step size indicated by the power control instruction in the first uplink scheduling signaling received at a current time when determining the target transmission power.

9.  A transmission power determination method applied to a terminal device, wherein the terminal device comprises a first SIM card and a second SIM card, and the method comprises:

    receiving, by the terminal device, first uplink scheduling signaling for scheduling a first-type uplink signal, wherein the first uplink scheduling signaling is uplink scheduling signaling sent to the first SIM card, the first uplink scheduling signaling comprises a power control instruction, the power control instruction is configured for instructing the terminal device to determine target transmission power based on the power control instruction, and the target transmission power is transmission power at which the first SIM card sends the first-type uplink signal through the terminal device; and

    in a case that the first SIM card and the second SIM card share the same radio frequency transmission path, if a transmission drop of the first-type uplink signal occurs on the first SIM card after the first SIM card receives the first uplink scheduling signaling at a previous time, using, by the terminal device, target transmission power determined after receiving the first uplink scheduling signaling at the previous time or target transmission power used for successfully transmitting the first-type uplink signal at the previous time as the target transmission power determined after receiving the first uplink scheduling signaling at a current time.

10. The method according to any one of claims 1 to 9, wherein the first-type uplink signal is a PUSCH uplink signal, a PUCCH uplink signal, or an SRS uplink signal.

11. A chip, comprising a processor, wherein the processor is configured to read and execute a computer program stored in a memory to perform the method according to any one of claims 1 to 10.

12. A terminal device, comprising: a processor, a memory, and an interface,

    wherein the processor, the memory, and the interface cooperate with each other to cause the terminal device to perform the method according to any one of claims 1 to 10; or
    the terminal device comprises the chip according to claim 11.

FIG. 1

FIG. 2

Step 301: a terminal device receives first uplink scheduling signaling sent by a base station to a first SIM card

Step 302: determine whether the first SIM card and a second SIM card share the same radio frequency transmission path

No →

Yes ↓

Step 303: the terminal device determines whether a transmission drop occurs on the first SIM card after receiving the first uplink scheduling signaling at a previous time

No →

Yes ↓

Step 304: the terminal device adjusts a power adjustment step size corresponding to a power control instruction in the first uplink scheduling signaling received at a current time to zero

Step 305: the terminal device calculates transmission power of a first-type uplink signal according to an adjusted value of the power adjustment step size corresponding to the power control instruction in the first uplink scheduling signaling received at the current time and a power adjustment value calculated after receiving the first uplink scheduling signaling at the previous time

Step 306: the terminal device calculates the transmission power of the first-type uplink signal according to a value of the power adjustment step size corresponding to the power control instruction in the first uplink scheduling signaling received at the current time and the power adjustment value calculated after receiving the first uplink scheduling signaling at the previous time

Step 307: the terminal device determines whether the radio frequency transmission path is occupied at current

Yes →

No ↓

Step 308: the terminal device sends the first-type uplink signal to the base station according to the calculated transmission power, where the first-type uplink signal is a signal corresponding to the first uplink scheduling signal received at the current time

Step 309: the terminal device does not send the first-type uplink signal (the transmission drop occurs on the first SIM card)

FIG. 3

Step 401: a terminal device receives first uplink scheduling signaling sent by a base station to a first SIM card

Step 402: determine whether the first SIM card and a second SIM card share the same radio frequency transmission path

No

Yes

Step 403: the terminal device determines whether a transmission drop occurs on the first SIM card after receiving the first uplink scheduling signaling at a previous time

No

Yes

Step 404: the terminal device does not calculate transmission power of a first-type uplink signal according to a value of a power adjustment step size corresponding to a power control instruction in the first uplink scheduling signaling received at a current time

Step 405: the terminal device calculates transmission power of the signal according to the value of the power adjustment step size corresponding to the power control instruction in the first uplink scheduling signaling received at the current time

Step 406: the terminal device determines whether the radio frequency transmission path is occupied at current

Yes

No

Step 407: the terminal device sends the first-type uplink signal to the base station according to the calculated signal transmission power, where the first-type uplink signal is a signal corresponding to the first uplink scheduling signaling received at the current time

Step 408: the terminal device does not send the first-type uplink signal (the transmission drop occurs on the first SIM card)

FIG. 4

Step 501: a terminal device receives first uplink scheduling signaling sent by a base station to a first SIM card

Step 502: determine whether the first SIM card and a second SIM card share the same radio frequency transmission path

No

Yes

Step 503: the terminal device determines whether a transmission drop occurs on the first SIM card after receiving the first uplink scheduling signaling at a previous time

No

Yes

Step 504: the terminal device drops a power control instruction in the first uplink scheduling signaling received at a current time

Step 505: the terminal device uses target transmission power determined after receiving the first uplink scheduling signaling at the previous time or target transmission power used for successfully transmitting a first-type uplink signal at the previous time as transmission power of the first-type uplink signal determined after receiving the first uplink scheduling signaling at the current time

Step 506: the terminal device calculates the transmission power of the first-type uplink signal according to a value of the power adjustment step size corresponding to the power control instruction in the first uplink scheduling signaling received at the current time

Step 507: the terminal device determines whether the radio frequency transmission path is occupied at current

Yes

No

Step 508: the terminal device sends the first-type uplink signal to the base station according to the calculated signal transmission power, where the first-type uplink signal is a signal corresponding to the first uplink scheduling signaling received at the current time

Step 509: the terminal device does not send the first-type uplink signal (the transmission drop occurs on the first SIM card)

FIG. 5

## Electronic device 100

Antenna 1                                        Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Microphone [170C]

Headset jack [170D]

Audio module [170]

Display screens 1 to N [194]

Cameras 1 to N [193]

Indicator [192]

Motor [191]

Key [190]

Internal memory [121]

SIM card interfaces 1 to N [195]

External memory interface [120]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Proximity light sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 6

| Application layer | Camera | Calendar | Map | WLAN | Music | Short message |
|---|---|---|---|---|---|---|
| | Gallery | Call | Navigation | Bluetooth | Video | ... |

| Application program Framework layer | Window manager | Content provider | Phone manager | Resource manager |
|---|---|---|---|---|
| | Notification manager | View system | ... | |

| System library | Surface manager | 3D graphics processing library | Android Runtime |
|---|---|---|---|
| | 2D graphics engine | Media library | ... | |

| Kernel layer | Display driver | Camera driver | |
|---|---|---|---|
| | Audio driver | Sensor driver | ... |

FIG. 7

## INTERNATIONAL SEARCH REPORT

International application No.

**PCT/CN2023/117367**

### A. CLASSIFICATION OF SUBJECT MATTER

H04W52/02(2009.01)i; H04W52/14(2009.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, EXTXT, DWPI, CNKI, 3GPP: 发射, 功率, 控制, 调整, 双卡, 多卡, 共享, 共用, 射频, 通道, 丢弃, 丢失, 改变, 提高, 调高, 不, 没, 无, 必要, 需要, 忽略, 步长, TPC, power, control, dual, multi+, SIM, DSDA, shar+, RF, radio, drop, chang+, adjust, PUSCH

### C. DOCUMENTS CONSIDERED TO BE RELEVANT

| Category* | Citation of document, with indication, where appropriate, of the relevant passages | Relevant to claim No. |
|---|---|---|
| X | CN 104902553 A (MARVELL INTERNATIONAL, LTD.) 09 September 2015 (2015-09-09) description, paragraphs [0029]-[0031], [0034]-[0053] and [0068], and figures 1-4 | 1-12 |
| A | CN 114449637 A (CHINA UNITED NETWORK COMMUNICATIONS GROUP CO., LTD.) 06 May 2022 (2022-05-06) entire document | 1-12 |
| A | US 2016029222 A1 (APPLE INC.) 28 January 2016 (2016-01-28) entire document | 1-12 |
| A | WO 2022111718 A1 (HUAWEI TECHNOLOGIES CO., LTD.) 02 June 2022 (2022-06-02) entire document | 1-12 |
| A | US 2021289445 A1 (TELEFONAKTIEBOLAGET LM ERICSSON (PUBL)) 16 September 2021 (2021-09-16) entire document | 1-12 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 November 2023** | **29 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/117367**

| Patent document cited in search report | | | Publication date (day/month/year) | Patent family member(s) | | | Publication date (day/month/year) |
|---|---|---|---|---|---|---|---|
| CN | 104902553 | A | 09 September 2015 | None | | | |
| CN | 114449637 | A | 06 May 2022 | None | | | |
| US | 2016029222 | A1 | 28 January 2016 | WO | 2016014315 | A1 | 28 January 2016 |
| | | | | TW | 201608851 | A | 01 March 2016 |
| WO | 2022111718 | A1 | 02 June 2022 | CN | 114584966 | A | 03 June 2022 |
| US | 2021289445 | A1 | 16 September 2021 | WO | 2019073359 | A1 | 18 April 2019 |
| | | | | EP | 3695658 | A1 | 19 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211741318